(19) Europäisches Patentamt
European Patent Office
Office européen des brevets

(11) EP 3 187 544 B1

(12) EUROPEAN PATENT SPECIFICATION

(45) Date of publication and mention of the grant of the patent:
**05.05.2021 Bulletin 2021/18**

(21) Application number: **15822713.2**

(22) Date of filing: **20.07.2015**

(51) Int Cl.:
***C08L 73/00*** *(2006.01)* ***C08G 67/02*** *(2006.01)*
***F16B 35/00*** *(2006.01)* ***H01R 3/00*** *(2006.01)*
***C08J 5/00*** *(2006.01)*

(86) International application number:
**PCT/KR2015/007505**

(87) International publication number:
**WO 2016/010406 (21.01.2016 Gazette 2016/03)**

(54) **POLYKETONE RESIN COMPOSITION HAVING OUTSTANDING WATER RESISTANCE**

POLYKETON-HARZ-ZUSAMMENSETZUNG, DIE WASSERFESTIGKEIT AUSGESETZT WIRD

COMPOSITION DE RÉSINE DE POLYCÉTONE PRÉSENTANT UNE EXCELLENTE RÉSISTANCE À L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**18.07.2014 KR 20140090891**
**07.11.2014 KR 20140154633**
**07.11.2014 KR 20140154622**
**07.11.2014 KR 20140154614**
**07.11.2014 KR 20140154615**
**07.11.2014 KR 20140154616**
**07.11.2014 KR 20140154628**
**07.11.2014 KR 20140154625**
**07.11.2014 KR 20140154621**
**07.11.2014 KR 20140154635**
**07.11.2014 KR 20140154630**
**19.11.2014 KR 20140162014**
**19.11.2014 KR 20140161991**
**19.11.2014 KR 20140162007**
**19.11.2014 KR 20140162013**
**19.11.2014 KR 20140162016**
**19.11.2014 KR 20140162018**
**19.11.2014 KR 20140162019**
**19.11.2014 KR 20140162022**
**27.05.2015 KR 20150074029**
**27.05.2015 KR 20150074033**

(43) Date of publication of application:
**05.07.2017 Bulletin 2017/27**

(73) Proprietor: **HYOSUNG CHEMICAL CORPORATION**
**Seocho-gu**
**Seoul, 06578 (KR)**

(72) Inventors:
- **CHOI, Jong In**
  **Seoul 152-755 (KR)**
- **CHO, Kyung Tae**
  **Cheongju-si**
  **Chungcheongbuk-do 361-846 (KR)**
- **YOON, Sung Kyoun**
  **Anyang-si**
  **Gyeonggi-do 431-811 (KR)**
- **KIM, Seong-Hwan**
  **Seoul 135-519 (KR)**
- **LEE, Jong**
  **Seoul 157-741 (KR)**
- **KIM, Ka Young**
  **Anyang-si**
  **Gyeonggi-do 431-799 (KR)**
- **BAEK, Seung Jo**
  **Anyang-si**
  **Gyeonggi-do 431-781 (KR)**

(74) Representative: **v. Bezold & Partner Patentanwälte - PartG mbB**
**Akademiestraße 7**
**80799 München (DE)**

(56) References cited:
**EP-A1- 0 213 671** **EP-A1- 0 569 101**
**WO-A1-00/31164** **GB-A- 2 334 522**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

JP-A- 2001 081 306
JP-A- 2007 131 651
KR-A- 20080 061 174
KR-A- 20110 078 381
KR-A- 20120 073 960
US-A- 5 077 385

## Description

### Technical Field

The present invention relates to a polyketone resin composition having outstanding moisture-absorption rate and shock resistance, and particularly produced by mixing para-aramid fiber, benzophenone, glass fiber, and etc. to polyketone copolymer, and relates to a polyketone resin composition used as marine bolts, clips and holders, connector, switches, bobbins, sludge-treatment chains, cable ties, automobile fuel inlets, green juicer screws, office partition frames, box frames, and etc.

### Background Art

Engineering plastics are widely used as interior and exterior material of vehicle such as wheel cover, radiator grille, and fuel inlet, and material for electrical components such as copy machine and computer external case. Moreover, recently as interest in health increased, the engineering plastics are widely used as component for drinking water such as water purifier component, green juicer screw, and etc. Also, engineering plastics such as polyamide, polyester, and polycarbonate, and etc. are used as main materials of chain for waste water treatment, marine cable tie, and etc. which are related to environment especially water purifying industry.
However, the engineering plastics are not only excessively using raw material and polymerization process cost but also having disadvantage such as not satisfying in properties such as moisture-absorption rate, water resistance, shock resistance, and etc.
Polyketone is inexpensive material in raw material and polymerization process cost compared to general engineering plastic materials such as polyamide, polyester, and polycarbonate. Polyketone has excellent properties in moisture-absorption rate, water resistance, and shock resistance, and etc. compared to the polyamide, the polyester, and the polycarbonate. Therefore, carbon monoxide known as polyketone or polyketone polymer and a group of linear alternative polymer comprising at least one kind of ethylene unsaturated hydrocarbon are gaining more interest.
U.S. Patent No. 4,880,903 discloses carbon monoxide, ethylene, and other olefin-based unsaturated hydrocarbon, for example, linear alternative polyketone terpolymer comprising propylene.
EP 0 213 671 A1 relates to novel polymers of carbon monoxide, ethene and one or more other olefinically unsaturated hydrocarbons, which polymers exhibit a relatively low melting point of between 150 and 245°C, as well as to a process for preparing the same.
GB 2 334 522 A relates to polyketone polymer compositions containing a stabilizer agent against heat degradation during their end-use.
WO 00/31164 A1 discloses a packaging material comprising a polyketone composition which has a low oxygen permeability but a relatively high permeability to carbon dioxide.
US 5 077 385 A relates to a polyketone-based polymer material having oxygen, carbon dioxide and water barrier properties.
EP 0 569 101 A1 describes composite parts based on coextruded laminates comprising a layer of a linear alternating polyketone polymer and a layer of a thermoplastic polymer selected from thermoplastic polyurethanes, phenoxy resins and polyamides. The purpose of this application is to provide a composite in which the polymer layers thus formed exhibit strong interactive adhesion and the polymers used do not form strongly acidic products upon melt processing.
Polyketone polymer manufacturing method conventionally uses catalyst composition produced from Group VIII metal compound selected among palladium, cobalt, or nickel, anion of non-hydro halogen and strongon-hydrohalogentic acid, and bidentate ligand of phosphorus, arsenic or antimon. U.S. Patent No. 4,843,144 discloses manufacturing method of polymer of carbon monoxide and at least one ethylene unsaturated hydrocarbon using catalyst composition comprising palladium compound, anion of non-hydro halogen with less than 6 pKa, and bidentate ligand of phosphorus.

### Disclosure

### Technical Problem

The present invention relates to a polyketone resin composition having outstanding water resistance, moisture-absorption rate and shock resistance and to a production method therefor.
Polyketone resin composition of the present invention can be used as marine bolts, clips and holders, connectors, switches, bobbins, sludge treatment chains, cable ties, components for drinking water, automobile fuel inlets, outside mirror frames, automobile external wheel covers, automobile wheel accessories, automobile radiator end tanks, pressure cooker clean covers, green juicer screws, gasket for accumulator, gasket for alkali battery, robot cleaner gears, office

partition frames, box frames, and etc.

## Technical Solution

In order to achieve the objects of the present invention, the present invention provides a polyketone copolymer having outstanding water resistance, moisture-absorption rate and shock resistance, as copolymer of repeating units represented by the following general formulas (1) and (2) and intrinsic viscosity of the polyketone copolymer is 1.0 to 2.0 dl/g and molecular weight distribution is from 1.5 to 2.5

$$-[-CH_2CH_2-CO]_x- \quad (1)$$

$$-[-CH_2-CH(CH_3)-CO]y- \quad (2)$$

wherein x and y are each mol% of formula (1) and (2) of the polyketone copolymer, and y/x is 0.03 to 0.3, and wherein a ligand of catalyst composition used in polymerization of the polyketone copolymer is ((2,2-dimethyl-1,3-dioxane-5,5-diyl)bis(methylene))bis(bis(2-methoxyphenyl)phosphine).

Meanwhile, the present invention if needed also mixes aramid resin, benzophenone, glass fiber, flame retardant, additives to the polyketone copolymer.

Also, the present invention provides a manufacturing method produced by injection molding polyketone copolymer of repeating unit shown as the general formulas (1) and (2), which y/x is 0.03 to 0.3.

Polyketone resin composition produced according to the present invention can be used as material of marine bolts, clips and holders, connectors, switches, bobbins, sludge treatment chains, cable ties, automobile fuel inlets, green juicer screws, office partition frames, and box frames.

Provided polyketone bolt produced by injection molding blend of glass fiber and linear alternative polyketone comprising carbon monoxide and at least one kind of ethylene-based unsaturated hydrocarbon, and having moisture absorption rate 2.0% or less and used for industrial use or marine use. The polyketone bolt has content of the polyketone 60 to 90 wt% and content of the glass fiber 10 to 40 wt%, and in condition of 50°C and relative humidity 90%, property maintenance rate after water-absorption is 70% or more.

Provided polyketone molding product produced by injection molding linear alternative polyketone comprising carbon monoxide and at least one kind of olefin-based unsaturated hydrocarbon, and in forced wetting evaluation by ME/ES Spec (MS211-44), decline rate of tensile strength and flexural strength is 20% or less. Intrinsic viscosity of the polyketone is 1.0 to 2.0 dl/g, and ligand of catalyst composition used in polymerization of the polyketone is ((2,2-dimethyl-1,3-dioxane,5,5-diyl)bis(methylene))bis(bis(2-methoxyphenyl)phosphine), in forced wetting evaluation by ME/ES Spec (MS211-44) the polyketone molding product, decline rate of flexural modulus is 30% or less, and the polyketone molding product is tube fixing clip or tube fixing holder for attaching to car body.

Provided polyketone connector produced by injection molding a linear alternative polyketone comprising carbon monoxide and at least one kind ethylene-based unsaturated hydrocarbon, and in forced wetting evaluation by US CAR CLASS III, decline rate of flexural modulus is 30% or less and wear amount is 1.00 $mm^3$/kg/km or less, and ligand of catalyst composition used in polymerization of the linear alternative polyketone is ((2,2-dimethyl-1,3-dioxane,5,5-diyl)bis(methylene))bis(bis(2-methoxyphenyl)phosphine), and intrinsic viscosity of the linear alternative polyketone is 1.0 to 2.0 dl/g.

Provided polyketone molding product for automobile fuel comprising polyketone composition features intrinsic viscosity of polyketone is 1.0 to 2.0 dl/g, and ligand of catalyst composition used in polymerization of the polyketone is ((2,2-dimethyl-1,3-dioxane,5,5-diyl)bis(methylene))bis(bis(2-methoxyphenyl)phosphine).

Provided polyketone component for industrial use produced by injection molding blend comprising glass fiber, flame retardant and linear alternative polyketone comprising carbon monoxide and at least one kind of olefin-based unsaturated hydrocarbon, and having moisture-absorption rate less than 1.0%, and in criteria of the blend is total 100 weight%, the flame retardant is 2 to 20 weight%, and any one selected from group comprising halogen-based flame retardant, phosphorous-based flame retardant, hydrated metal compound, silicon compound, silicate, alkali metallic salt, and melamine-based flame retardant, and intrinsic viscosity of the polyketone is 1.0 to 2.0 dl/g, and in condition of temperature 50°C and relative humidity 90%, after treatment for 24 hours, tensile strength maintenance rate is 80% or more, and the polyketone component for industrial use is switch.

Provided polyketone bobbin of dimensional change rate less than 2.0%, and ligand of catalyst composition used in polymerization of the polyketone is ((2,2-dimethyl-1,3-dioxane,5,5-diyl)bis(methylene))bis(bis(2-methoxyphenyl)phosphine), and in criteria of blend is total 100 weight%, the flame retardant is 2 to 20 weight%, moisture-absorption rate is less than 2.0%, and in condition of temperature 50°C and relative humidity 90%, after treatment for 24 hours tensile strength maintenance rate is 80% or more.

Provided polyketone chain produced by injection molding blend comprising glass fiber and linear alternative

polyketone polymer comprising carbon monoxide and at least one kind of olefin-based unsaturated hydrocarbon, and maintenance rate of tensile strength after moisture absorption to tensile strength before moisture absorption is 70% or more,and ligand of catalyst composition used in polymerization of the polyketone polymer is ((2,2-dimethyl-1,3-dioxane,5,5-diyl)bis(methylene))bis(bis(2-methoxyphenyl)phosphine), blend comprises polyketone polymer of 50 to 90 weight% and glass fiber of 10 to 50 weight%, intrinsic viscosity of polyketone polymer is 1.0 to 2.0 dl/g, and the polyketone chain is used for waste water sludge treatment.

Provided cable tie produced by injection molding blend comprising 1 to 10 weight% of rubber and 90 to 99 weight% of linear alternative polymer comprising carbon monoxide and at least one kind of olefin-based unsaturated hydrocarbon, and palladium catalyst remaining amount is 5 to 50 ppm, and molecular weight distribution is 1.5 to 2.5, and the rubber is ethylene propylene diene monomer rubber, and ligand of catalyst composition in polymerization of the linear alternative polyketone is ((2,2-dimethyl-1,3-dioxane,5,5-diyl)bis(methylene))bis(bis(2-methoxyphenyl)phosphine), intrinsic viscosity of the linear alternative polyketone polymer is 1.0 to 2.0 dl/g, in condition of 50°C and relative humidity 90% RH, moisture absorption rate is less than 1.0%, and impact strength measured in condition of 50°C and relative humidity 90% RH to impact strength measured in condition of 25 °C and relative humidity 65% RH is 85% or more. The present invention provides component for drinking water produced by injection molding blend comprising linear alternative polyketone polymer comprising carbon monoxide and olefin-based unsaturated hydrocarbon, and palladium catalyst remaining amount is 50 ppm or less, and molecular weight distribution is 1.5 to 2.5, and the blend further comprises glass fiber 1 to 40 weight% and ligand of catalyst composition in polymerization of the linear alternative polyketone is ((2,2-dimethyl-1,3-dioxane,5,5-diyl)bis(methylene))bis(bis(2-methoxyphenyl)phosphine), intrinsic viscosity is 1.0 to 2.0 dl/g, impact strength of the component for drinking water is 10 kJ/$m^2$ or more, in condition of 50°C and relative humidity 90% RH, moisture absorption rate is less than 1.5%, and impact strength measured in condition of 50°C and relative humidity 90% RH to impact strength measured in condition of 25°C and relative humidity 65% RH is 85% or more.

Polyketone blend automobile fuel inlet has flexural strength of 80 MPa or more in condition of 50°C and relative humidity 90%, and automobile fuel inlet in condition of 50°C and relative humidity 90% has 2.5% or less weight rate of change, in criteria of blend total is 100 weight%, the mineral filter is 5 to 50 weight%, and the automobile fuel inlet in condition of 50°C and relative humidity 90% in evaluation of rate of change to vertical direction or horizontal direction is 0.12% or less, and the mineral filter is any one selected among group comprising talc, kaolin, mica, wollastonite, $TiO_2$-coated mica platelet, silica, alumina, and borosilicate.

The present invention provides polyketone outside mirror frame produced by injection molding blend mixed 10 to 50 weight% of glass fiber and 50 to 90 weight% of linear alternative polyketone comprising carbon monoxide and at least one kind of olefin-based hydrocarbon, and in condition of 50°C and relative humidity 90%, moisture-absorption rate is 2.0% or less, impact strength of outside mirror frame is 15 kJ/$m^2$ or more, flexural strength is 80 MPa or more, intrinsic viscosity is 1.0 to 2.0 dl/g, and molecular weight distribution is 1.5 to 2.5.

The present invention provides automobile external wheel cover produced by injection molding polyketone blend comprising ABS and linear alternative polyketone copolymer comprising carbon monoxide and at least one kind of olefin-based unsaturated hydrocarbon, and content of ABS is 5 to 35 weight% compared to the total weight, impact strength of wheel accessory is 30 kJ/$m^2$ or more, and absorption rate of the wheel accessory is 1.5% or less in condition of 50°C and relative humidity 90%, impact strength maintenance rate of wheel accessory is 80% or more in 2 hr and 100°C after immersion of 35% of calcium chloride solution.

The present invention provides automobile radiator end tank produced by injection molding polyketone copolymer, glass fiber, nylon 61, and silane additives, intrinsic viscosity of polyketone copolymer is 1.0 to 2.0 dl/g, molecular weight distribution is 1.5 to 2.5, the polyketone copolymer, glass fiber, nylon 61, and silane additives in criteria of weight ratio each mixed 50 to 74.9 weight%, 20 to 40 weight%, 5 to 20 weight%, and 0.1 to 10 weight%, and polyketone resin composition in condition of temperature 50°C and relative humidity 90% in evaluation by ME/ES SPEC (MS211-47) properties maintenance rate is 80% or more, and in condition of temperature 50°C and relative humidity 90% in evaluation by ME/ES SPEC (MS211-47) product weight change of rate is 5.0% or less.

The present invention provides polyketone pressure cooker clean cover produced by injection molding blend comprising glass fiber of 15 to 30 weight% and 70 to 85 weight% of linear alternative polyketone polymer comprising carbon monoxide and at least one kind of olefin-based unsaturated hydrocarbon, and palladium catalyst remaining amount is 50 ppm and molecular weight distribution is 1.5 to 2.5, and ligand of catalyst composition in polymerization is ((2,2-dimethyl-1,3-dioxane-5,5-diyl)bis(methylene))bis(bis(2-methoxyphenyl)phosphine), impact strength of pressure cooker clean cover is 20 kJ/$m^2$ or more, water absorption rate is 2% or less, in condition of temperature 50°C and relative humidity 90%, in evaluation by ME/ES SPEC (MS211-47), change rate evaluation to vertical direction or horizontal direction is 0.12% or less.

The present invention provides polyketone green juicer produced by injection molding linear alternative polyketone comprising carbon monoxide and at least one kind of olefin-based unsaturated hydrocarbon, 80% or more tensile strength maintenance rate after immersion for 10 days in acetic acid 3% solution, ethylene and propylene molar ratio is 9 to 24:1, intrinsic viscosity is 1.0 to 2.0 dl/g, molecular weight distribution is 1.5 to 2.5, ligand of catalyst composition in

polymerization is ((2,2-dimethyl-1,3-dioxane-5,5-diyl)bis(methylene))bis(bis(2-methoxyphenyl)phosphine).

The present invention provides gasket for accumulator produced by injection molding linear alternative polyketone polymer comprising carbon monoxide and at least one kind of olefin-based unsaturated hydrocarbon, palladium catalyst remaining amount is 50 ppm or less, molecular weight distribution is 1.5 to 2.5, ethylene and propylene molar ratio is 9 to 24:1, intrinsic viscosity of polyketone polymer is 2.0 dl/g, water absorption rate of gasket for accumulator is less than 1.0% in condition of temperature 50°C and relative humidity 90% RH, dimensional change rate after treatment for 24 hours is less than 0.3% in 85°C and relative humidity 85% RH

The present invention provides gasket for alkaline accumulator produced by injection molding blend and linear alternative polyketone comprising carbon monoxide and at least one kind of olefin-based unsaturated hydrocarbon, palladium catalyst remaining amount is 50 ppm or less, molecular weight distribution is 1.5 to 2.5, and comprising polymer 55 to 70 weight%, Nylon 6 20 to 30 weight%, and rubber 10 to 15 weight%, and ethylene and propylene molar ratio is 9 to 24:1, the rubber is ethyloctane rubber, and water absorption rate of gasket for alkaline accumulator after immersion for 7 days in 30°C is less than 4%.

The present invention provides gear for robot cleaner produced by injection molding using tooth type mold in condition of 70 to 80 bar pressure, 230 to 260°C temperature, and mold temperature of 150°C, and based on in criteria of KS C IEC 60704-2-1, through semi-anechoic room measurement method measuring noise for 30 seconds, less than 90 dB, copolymer intrinsic viscosity is 1.0 to 2.0 dl/g and molecular weight distribution is 1.5 to 2.5.

The present invention provides office polyketone partition frame, ethylene and propylene molar ratio is 99:1 to 85:15, intrinsic viscosity of polyketone copolymer is 1.0 to 2.0 dl/g, ligand of catalyst composition used in polymerization of polyketone copolymer is ((2,2-dimethyl-1,3-dioxane-5,5-diyl)bis(methylene))bis(bis(2-methoxyphenyl)phosphine), and impact strength of office polyketone partition frame is 20 $kJ/m^2$.

The present invention provides polyketone box frame produced by injection molding blend comprising glass fiber of 15 to 40 weight% and 60 to 85 weight% of linear alternative polyketone comprising carbon monoxide and at least one kind of olefin-based unsaturated hydrocarbon, and palladium catalyst remaining amount is 5 to 50 ppm, and molecular weight distribution is 1.5 to 2.5, and ethylene and propylene molar ratio is 99:1 to 85:15, intrinsic viscosity of polyketone polymer is 1.0 to 2.0 dl/g, flexural strength of polyketone box frame is 220 MPa or more, and properties maintenance rate after 48 hours deposition in hot water of 50°C is 85% or more.

## Advantageous Effects

Polyketone resin composition according to the present invention is excellent in water-absorption rate, water resistance, and shock resistance, so it can be used as a marine bolts, clips and holders, connectors, switches, bobbins, sludge treatment chains, cable ties, automobile fuel inlets, green juicer screws, office partition frames, box frames.

## Detailed Description of the Preferred Embodiments

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

Polyketone according to the present invention is linear alternative structure, and unsaturated hydrocarbon per one molecule comprises carbon monoxide. The polyketone is used as precursor and number of suitable ethylenically unsaturated hydrocarbon is 20 or less and preferably 10 or less carbon atoms. Also, ethylenically unsaturated hydrocarbon is ethane and $\alpha$-olefin, for example, aliphatic such as propene, 1-butene, iso-butene, 1 -hexene, 1-octene, or comprising aryl substituent on another aliphatic molecular, especially aryl aliphatic comprising aryl substituent on ethylenically unsaturated carbon atom. Examples of aryl aliphatic hydrocarbon among ethylenically unsaturated hydrocarbon are styrene, p-methyl styrene, p-ethyl styrene, and m-isopropyl styrene. Polyketone polymer preferably used in the present invention is copolymer of carbon monoxide and ethane or the second ethylenically unsaturated hydrocarbon having carbon monoxide, ethane, and at least 3 carbon atoms, especially $\alpha$-olefin-based terpolymer such as propene.

When the polyketone terpolymer is used as the main polymer component of blend of the present invention, regarding each unit comprising the second hydrocarbon part in terpolymer, there are at least 2 units comprising ethylene part. Number of units comprising the second hydrocarbon part is preferably 10 to 100.

The present invention provides box frame produced injection molding blend comprising 10 to 40 weight% of glass fiber and 60 to 90 weight% of linear alternative polyketone polymer comprising carbon monoxide and at least on olefin-based unsaturated hydrocarbon, and palladium catalyst remaining amount is 5 to 50 ppm, and molecular weight distribution is 1.5 to 2.5.

In this case, diameter of the glass fiber is preferably 10 to 15 nm, but it is not limited thereto. If diameter of glass fiber is less than 10 nm, glass fiber form can be changed and mechanical properties can be declined.

Moreover, the composition ratio by weight of the glass fiber to the total composition is preferably 10 to 40 weight%. If the glass fiber composition is less than 10 weight%, mechanical strength can be declined, and if it is more than 40 weight%, extrusion and injection process workability can be declined.

Number average molecular weight measured by gel penetration chromatography is preferably 100 to 200,000 and especially polyketone of 20,000 to 90,000 is preferable. Physical properties of polymer are set according to molecular amount, according to whether polymer is copolymer or terpolymer, and in case of terpolymer according to character of the second hydrocarbon. Ordinary melting point of polymer used in the present invention is 175°C to 300°C, and generally 210°C to 270°C. Limiting Viscosity Number (LVN) of polymer measured by standard viscosity measuring device and HFIP (Hexafluoroisopropylalcohol) in 60°C is 0.5 dl/g to 10 dl/g, and preferably 1.0 dl/g to 2.0 dl/g. In this case, if Limiting Viscosity Number is less than 0.5 dl/g, mechanical properties are declined, and if it is more than 10 dl/g, processability is declined.

U.S. Patent No. 4,843,144 discloses preferable manufacturing method of polyketone polymer. In existence of catalyst composition preferably produced from palladium compound (measured in water at 18°C), anion of nonhydrohalogen acid of less than 6 pKa or preferably less than 2 pKa, and bidentate ligand of phosphorus, contacting carbon monoxide and hydrocarbon monomer in polymerization condition, and produces polyketone polymer.

Polyketone manufacturing method can use liquefied polymerization implemented under alcohol solvent through catalyst composition comprising carbon monoxide, olefin palladium compound, acid of 6 or less pKa, and bidentate ligand compound of phosphorus. Polymerization reaction temperature is preferably 50 to 100°C and reaction pressure is 40 to 60 bar. After polymerization of polymer, through purified process retrieving and remained catalyst composition is removed by solvent such as alcohol or acetone.

In this case, for palladium compound, acetic acid palladium is preferable and the amount is preferably 10-3 to 10-1 1 mole. Examples of acid with less than 6 pKa are trifluoroacetic acid, p-toluenesulfonic acid, sulfuric acid, sulfonic acid, and etc. In the present invention, trifluoroacetic acid is used and the amount is compared to palladium 6 to 20 equivalent weight. Also, bidentate ligand compound of phosphorus is ((2,2-dimethyl-1,3-dioxane-5,5-diyl)bis(methylene))bis(bis(2-methoxyphenyl)phosphine), and the amount is compared to palladium 1 to 1.2 equivalent weight.

The following statement explains polymerization of polyketone in detail.

Monoxide, ethylenically unsaturated compound, and one or more olefinically unsaturated compound, three or more copolymer, especially monoxide-oriented repeating unit, and ethylenically unsaturated compound-oriented repeating unit, and propylenically unsaturated compound-oriented repeating unit are alternatively connected in structure of polyketone, the polyketone is excellent in mechanical properties and thermal properties and processability, and having high abrasion resistance, chemical resistance, and gas barrier ability, therefore, useful in a variety of applications. High molecular weight of copolymer, terpolymer, or more copolymerized polyketone has higher processability and thermal properties, and regarded as useful engineering plastic with excellent economic efficiency. Especially, having high abrasion resistance used as component such as automobile gear, having high chemical resistance used as lining material of chemical transport pipe, and having high gas barrier ability used as light weight gasoline tank. In addition, in case of using ultra high molecular weight polyketone having 2 or more intrinsic viscosity in fiber, elongation of high magnification is possible, fiber having high strength and high elasticity modulus oriented in elongation direction, and it is suitable material in construction material and industrial material such as reinforcement of belt and rubber hose, and reinforcement of tire cord and concrete.

Polyketone manufacturing method under the presence of (a) Group 9, Group 10 or Group 11 transition metal compound, (b) organic metal complex catalyst comprising ligand having Group 15 element in polyketone manufacturing method by terpolymerization of carbon monoxide, ethylenically and propylenically unsaturated compound among liquid medium, the carbon monoxide, ethylene, and propylene liquefied polymerized in mixed solvent of alcohol (for example, methanol) and water, and produces linear terpolymer, and for the mixed solvent, mixture of methanol 100 part by weight and water 2 to 10 part by weight can be used. In mixed solvent if content of water is less than 2 part by weight, ketal is formed and thermal stability can be declined in process, and if content of water is more than 10 part by weight, mechanical properties of product can be declined.

In this case, for liquid medium, methanol, dichloromethane or nitromethane which were mainly used in conventional polyketone manufacturing are not used, and mixed solvent comprising acetic acid and water is used. By using mixed solvent of acetic acid and water for liquid medium in polykeone manufacture, manufacturing cost of polyketone is reduced and catalytic activity is enhanced.

In case of using mixed solvent of acetic acid and water for liquid medium, if concentration of water is less than 10 vol%, it impacts less in catalyst activity, and if concentration is more than 10 vol%, catalyst activity is rapidly increased. Meanwhile, if concentration of water is more than 30 vol%, catalyst activity tends to decrease. Therefore, for liquid medium, mixed solvent comprising acetic acid of 70-90 vol% and water of 10-30 vol% is preferably used.

In this case, catalyst comprises periodic table (IUPAC Inorganic Chemistry Nomenclature revised edition, 1989) (a) Group 9, Group 10 or Group 11 transition metal compound, (b) ligand having Group 15 element.

Among Group 9, Group 10 or Group 11 transition metal compound (a), examples of Group 9 transition metal

compound are cobalt or ruthenium complex, carbon acid salt, phosphate, carbamate, sulfonate, and etc., specific examples are cobalt acetate, cobalt acetylacetate, ruthenium acetate, trifluoro-ruthenium acetate, ruthenium acetylacetate, trifluoro-methane sulfonic acid, and etc.

Examples of Group 10 transition metal compound are nickel or palladium complex, carbon acid salt, phosphate, carbamate, sulfonate, and etc., specific examples are nickel acetate, nickel acetylacetate, palladium acetate, trifluoro-palladium acetate, palladium acetylacetate, palladium chloride, bis(N,N-diethyl carbamate)bis(diethylamine)palladium, palladium sulfate, and etc.

Examples of Group 11 transition metal compound are copper or silver complex, carbon acid salt, phosphate, carbamate, sulfonate, and etc., specific examples are copper acetate, trifluoro-copper acetate, copper acetylacetate, silver acetate, trifluoro-silver acetate, silver acetylacetate, trifluoro-methane sulfonic silver, and etc.

Among them transition metal compound (a) preferable in cost and economically are nickel and copper compound, transition metal compound (a) preferable in the yield and molecular weight of polyketone is palladium compound, and in terms of enhancing catalyst activity and intrinsic viscosity using palladium acetate is most preferable.

The ligand having Group 15 element which is

[formula 3]

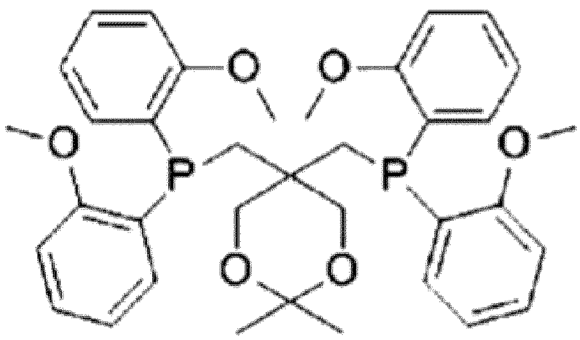

((2,2-dimethyl-1,3-dioxane-5,5-diyl)bis(methylene))bis(bis(2-methoxyphenyl)phosphine) of formula 3 shows the same activity expression as 3,3-bis-[bis-(2-methoxyphenyl)-phosphonylmethyl]-1,5-dioxa-spiro[5,5]undecane which is known as showing highest activity among polyketone polymerization catalyst introduced until now, and the structure is simpler and molecular weight is lower. Therefore, the present invention obtains highest activity as polymerization catalyst in relevant field, and providing novel polyketone polymerization catalyst with lower manufacturing cost and production cost. Manufacturing method of ligand for polyketone polymerization catalyst is as follows. Using bis(2-methoxyphenyl)phosphine, 5,5-bis(bromomethyl)-2,2-dimethyl-1,3-dioxane and sodium hydride (NaH) and obtaining ((2,2-dimethyl-1,3-dioxane-5,5-diyl)bis(methylene))bis(bis(2-methoxyphenyl)phosphine) features manufacturing method of ligand for polyketone polymerization catalyst. Manufacturing method of ligand for polyketone polymerization catalyst of the present invention is different from conventional synthesis method of 3,3-bis-[bis-(2-methoxyphenyl)phosphonylmethyl]-1,5-dioxaspiro[5,5]undecane as under safe environment not using lithium through simple process, ((2,2-dimethyl-1,3-dioxane-5,5-diyl)bis(methylene))bis(bis(2-methoxyphenyl)phosphine) can be commercially mass-synthesized.

In a preferred embodiment, manufacturing method of ligand for polyketone polymerization catalyst of the present invention goes through (a) a step of inserting bis(2-methoxyphenyl)phosphine and dimethylsulfoxide (DMSO) to reaction vessel under nitrogen atmosphere and adding sodium hydride in room temperature and stirring; (b) a step of adding 5,5-bis(bromethyl)-2,2-dimethyl-1,3-dioxane and dimethylsulfoxide to obtained mixed solution and stirring and reacting; (c) a step of after completing reaction inserting methanol and stirring; (d) a step of inserting toluene and water after separating layer, cleaning oil layer with water and drying with anhydrous sodium sulfate, pressure filtering and pressure concentration; and (e) a step of recrystallizing residue under methanol and obtaining ((2,2-dimethyl-1,3-dioxane-5,5-diyl)bis(methylene))bis(bis(2-methoxyphenyl)phosphine).

The amount of Group 9, Group 10, or Group 11 transition metal compound (a) differs suitable value according to selected ethylenically and propylenically unsaturated compound type or different polymerization condition, so the range is not uniformly limited, but conventionally capacity of reaction zone is 0.01 to 100 mmol per liter, and preferably 0.01 to 10 mmol. Capacity of reaction zone refers to capacity of liquid phase of reactor. The amount of ligand (b) is not limited, but transition metal compound (a) per 1mol is conventionally 0.1 to 3 mol and preferably 1 to 3 mol.

Moreover, adding benzophenone could be another feature in polymerization of the polyketone.

In the present invention, in polymerization of polyketone by adding benzophenone, it can achieve effects of enhancing intrinsic viscosity of polyketone. The (a) Group 9, Group 10 or Group 11 transition metal compound and

benzophenone molar ratio is 1: 5 to 100, preferably 1: 40 to 60. If transition metal and benzophenone molar ratio is less than 1:5, effects of enhancement in intrinsic viscosity of polyketone is not satisfactory, and if transition metal and benzophenone molar ratio is more than 1:100, catalyst activity of produced polyketone tends to decrease therefore not preferable.

Examples of ethylenically unsaturated compound polymerized with carbon monoxide are ethylene, propylene, 1-butene, 1-hexene, 4-methyl-1-pentene, 1-octene, 1-decene, 1-dodecene, 1-tetradecene, 1-hexadecene, α-olefin such as vinyl cyclohexane; alkenyl aromatic compound such as styrene, α-methyl styrene; cyclopentane, norbornene, 5-methyl norbornene, tetracyclododecene, tricyclo dodecane, tricyclo undecene, pentacyclopentadecene, pentacyclohexadecene, 8-ethyltetracyclododecene; halogenation vinyl such as vinyl chloride; acrylic ester such as ethyl acrylate and methyl acrylate. Among them preferable ethylenically unsaturated compound is α-olefin, and more preferably α-olefin with carbon number of 2 to 4, and most preferably ethylene, in terms of producing terpolymer polyketone inserting 120 mol% of propylene.

In this case, adjusting carbon monoxide and ethylenically unsaturated compound inserting ratio to 1:12 (molar ratio), and adjusting propylene to 120 mol% to the total mixed gas are preferable. In case of manufacturing polyketone, it is general to make carbon monoxide and ethylenically unsaturated compound inserting ratio to 1:1, but in the present invention wherein acetate and water is used as mixed solvent for liquid medium and adding benzophenone in polymerization, in the case of making carbon monoxide and ethylenically unsaturated compound inserting ratio to 1:12 and adjusting propylene 120 mol% to the total mixed gas not only enhances processability but also simultaneously achieves enhancement in catalyst activity and intrinsic viscosity. In case of the inserting amount of propylene is less than 1 mol%, it can no attain effects of terpolymer to lower melting temperature, and in the case of the inserting amount of propylene is more than 20 mol%, problem occurs such as impediment in enhancing intrinsic viscosity and catalyst activity, so it is preferable to adjust inserting ratio to 120 mol%.

Moreover, in the process, for liquid medium, mixed solvent of acetate and water is used, and adding benzophenone in polymerization, and by inserting carbon monoxide and ethylenically unsaturated compound and one or more olefin-based unsaturated compound not only polyketone catalyst activity and intrinsic viscosity enhance but also it is possible to produce terpolymer polyketone having high intrinsic viscosity by setting polymerization time for 12 hours, and this is different from conventional technology which set polymerization time for at least 10 hours to enhance intrinsic viscosity.

Terpolymer of carbon monoxide, the ethylenically unsaturated compound and propylenically unsaturated compound occurs by organic metal complex catalyst comprising the Group 9, Group 10 or Group 11 transition metal compound (a), ligand having Group 15 element (b), and the catalyst is formed by contacting to the 2 component. Contacting method can be selected arbitrary. In other words, among suitable solvent, solution mixed 2 components in advance can be used, or each 2 components can separately be provided to polymerization system and contact in polymerization system.

For polymerization method, solution polymerization method using liquid medium, suspension polymerization method, gas phase polymerization which impregnate high concentration catalyst solution to small polymer. Polymerization can be batch or continuous. Reactor used in polymerization can be used as the known or by processing. In regard of polymerization temperature there is no limit, generally 40°C to 250°C, preferably 50°C to 180°C is adopted. If reaction temperature is less than 40°C, reaction doesn't progress as polymerization reaction is not good, and if reaction temperature is more than 250°C, side reaction such as oligomer or monomer manufacture and decomposition reaction actively occurs than polymerization reaction of high molecular, so polyketone yield decreases. In regard of pressure in polymerization there is no limit, but generally the atmospheric pressure or 20 MPa, preferably 4 to 15 MPa. In pressure less than the atmospheric pressure, speed of polymerization reaction is very low, and in pressure more than 20 MPa, problem such as increasing side reaction rate occurs.

Polyketone of the present invention is preferable to have content of Pd element less than 50 ppm. If content of Pd element is more than 50 ppm, because of residual Pd element, thermal denaturation and chemical denaturation can easily occur, and in case of melting molding, viscosity of melting molding increases, and in case of dissolving in solvent, viscosity of doping material increases and causes poor processability. Also, in polyketone molding product which is obtained after molding, much Pd element is remained and causes poor thermal resistance of molding product. Content of Pd element in polyketone from the point of view of process passing property and thermal resistance of molding product is the better the lesser, preferably less than 10 ppm, and more preferably less than 5 ppm, and most preferably 0 ppm.

In the present invention, shortly before ending polyketone polymerization reaction, inserting bidentate ligand of phosphine series of 3 to 20 times of catalyst amount, after polymerization reaction remained catalyst (Pd) is combined to ligand of phosphine series and made not to be active, when reaction ends, during pressure, making polymerization reaction not to occur, and having effects of decreasing molecular weight distribution. Also, after polymerization reaction of combined compound, by cleaning it with methanol solvent reduces Pd content in polyketone and preventing polyketone deterioration or discoloration. In case of insertion amount of bidentate ligand of phosphine series is 3 times less than catalyst amount, ligand which combines with catalyst doesn't combine well, thereby polymerization reaction becomes

active, and in case of insertion amount of bidentate ligand of phosphine series is 20 times more than catalyst amount, there is problem such as cost for removing and cleaning ligand increases. Insertion amount of bidentate ligand of phosphine series is preferably 3 to 10 times, and more preferably 3 to 5 times.

Monomer unit is in alternately, thereby polymer comprises formula -(CO)-A'- (wherein A' is monomer unit oriented from applied monomer A) unit, one or more olefin-based unsaturated compound (simply shown as A) and high molecular weight linear polymer of carbon monoxide can produce monomer by contacting catalyst composition solution containing palladium in diluted solution which polymer doesn't dissolve. During polymerization process, polymer is obtained in form of suspension in diluted solution. Polymer manufacture is mainly done by batchwise.

Batch manufacture of polymer is conventionally adopting catalyst in reactor containing diluted solution and monomer and having desired temperature and pressure. As polymerization is in progress, pressure decreases, and concentration of polymer in diluted solution increases, and viscosity of suspension increases. Viscosity of suspension, for example until it reaches at high value which occurs difficulty in heat removal, polymerization continues. During batch polymerization manufacture, by adding monomer to reactor during polymerization, not only temperature but also pressure can be maintained constantly.

Linear alternative polyketone is formed according to polymerization method stated above.

Hereinafter, the constitution and the effects of the present invention will be described in detail with reference to Examples and Comparative Examples. These Examples are provided only for the illustrative purpose, and it should not be construed that the scope of the invention is limited thereto.

The intrinsic viscosity and the catalytic activity of the polyketone was evaluated in the same manner as the following method.

(1) Intrinsic viscosity

After dissolving polymerized resin in concentration of 0.01g/100ml~1g/100ml (m-cresol) in 60°C thermostat for 1 to 5 hours, by using Ubelode viscometer, measuring viscosity in 30°C. After plotting the viscosity according to the concentration (plot) one, it is obtained by extrapolating the inherent viscosity.

Catalyst activity

It is calculated by polymerized resin weight/palladium weight·time(kg/g-Pd·hr)

[polymerization example 1]

Palladium acetate 0.0140g

((2,2-dimethyl-1,3-dioxane-5,5-diyl)bis(methylene))bis(bis(2-methoxyphenyl)phosphine) of 0.0399 g is dissolved in acetone 100 ml with benzophenone 0.5694 g. The mixed solution dissolves in mixed solvent of methanol 2249 ml and water 417 ml, and the solution removes air by vacuum, and inserted in nitrogen substituted stainless autoclave. After sealing autoclave, stirring contents in speed of 800 rpm and heating, when temperature reaches 70°C, ethylene/propylene/ carbon monoxide (partial pressure=46/4/50) is added until internal pressure of autoclave is 80 bar. Maintaining internal temperature 70°C and internal pressure 80 bar, continuing agitation for 2 hours. After cooling, gas in autoclave is spread, and contents are taken out. Reaction solution is filtered, washing acetone, ethanol, methanol several times, pressure drying in room temperature to 80°C, and obtains polymer 168.4 g. From 13C-NMR and IR result, the polymer is verified as polyketone comprising carbon monoxide oriented repeating unit and ethylene and proplene oriented repeating unit.

Catalyst activity is 12.5 kg/gPd·hr and intrinsic viscosity is value of 1.4 dl/g. Melting index measuring result is 33 g / 10 min and melting temperature results 220°C.

NY66 used as material of conventional connector has higher impact strength during water absorption than in dry state. (10 kJ/$m^2$, dry : 5 kJ/$m^2$). For impact improvement of connector, NY material increases impact strength by forced wetting process, but as impact strength of polyketone itself is high, wetting process can be deleted. Therefore, in the present invention, by deleting wetting process connector manufacture process can be simplified and because of this economic feasibility can be obtained in connector manufacture process.

Number average molecular weight measured by gel penetration and chromatography is preferably 100 to 200,000 especially 20,000 to 90,000 of polyketone polymer. Physical properties of polymer according to molecular weight, according to whether polymer is copolymer or terpolymer, or in case of terpolymer, it is determined according to properties of the second hydrocarbon portion. Polymer used in the present invention has conventional melting point of 175°C to 300°C, and generally 210°C to 270°C. Limiting Viscosity Number (LVN) of polymer measured by using standard viscosity measuring device with HFIP (Hexafluoroisopropylalcohol) in 60°C is 0.5 dl/g to 10 dl/g, and preferably 1 dl/g to 2 dl/g. In case of limiting viscosity number of polymer is less than 0.5, polyketone mechanical properties and

chemical properties decline, and in case of limiting viscosity number of polymer is more than 10, moldability declines.

Meanwhile, polyketone molecular weight distribution is 1.5 to 2.5, more preferably 1.8 to 2.2. If molecular weight distribution is less than 1.5, polymerization transference number declines, and if molecular weight distribution is more than 2.5, moldability declines. In order to adjust the molecular weight distribution adjusting proportionately according to palladium catalyst amount and polymerization temperature is possible. In other words, if palladium catalyst amount increases, or polymerization temperature is more than 100°C, molecular amount distribution increases.

Linear alternative polyketone is formed according to polymerization method stated above.

Polyketone polymer of the present invention is polyketone copolymer of y/x 0.03 to 0.3. x and y in the following formula indicate each mol% in polymer.

$$-(CH_2CH_2\text{-}CO)x- \qquad \text{formula (1)}$$

$$-(CH_2CH(CH_3)\text{-}CO)y- \qquad \text{formula (2)}$$

Copolymer comprising repeating unit shown as formula (1) and (2) of the present invention, y/x is preferably 0.03 to 0.3. If the y/x is less than 0.05, there are limits such as melting property and processability decline, and if the y/x is more than 0.3, mechanical properties decline. Moreover, y/x is more preferably 0.03 to 0.1. Also, melting point of polymer can be adjusted by adjusting ratio of ethylene and propylene of polyketone polymer. For example, in case of molar ratio of ethylene : propylene : carbon monoxide is adjusted to 46 : 4 : 50, melting point is approximately 220°C, and if molar ratio is adjusted to 47.3 : 2.7 : 50, melting point is adjusted to 235°C.

Polyketone terpolymer produced according to the present invention is excellent in moisture absorption rate, water resistance, and shock resistance, and applied in a variety of products such as components for industrial use and marine use. Specifically, it can be used in electrical components such as connectors, bobbins, cable ties, gasket for accumulator, gasket for alkali battery, and interior and exterior materials of vehicle such as automobile fuel inlets, automobile outside mirror frames, automobile external wheel covers, automobile radiator end tanks, cup holders, and etc. Moreover, polyketone terpolymer can be applied in marine industrial field such as sludge treatment chains and water purifier components, and household goods field such as pressure cooker clean covers, green juicer screw, office partition frames, and box frames.

Polyketone of the present invention can be used alone, but in order to enhance water-absorption rate, water resistance, and shock resistance, para-aramid fiber, benzophenone, glass fiber, flame retardant, and other additives can be mixed and blended.

The para-aramid fiber is added to enhance water resistance, compared to 100 parts by weight of polykertone terpolymer 5 to 50 parts by weight is added, preferably 10 to 50 parts by weight, more preferably 20 to 50 parts by weight. If added para-aramid fiber content is less than 5 parts by weight, water-absorption rate and water-resistance of polyketone resin composition decline, and if it is more than 50 parts by weight, mechanical properties such as shock resistance and modability, and etc. can decline.

The benzophenone is for enhancing intrinsic viscosity in polymerization of polyketone, the (a) Group 9, Group 10 or Group 11 transition metal compound and benzophenone molar ratio is 1 : 5 to 100, preferably 1 : 40 to 60. If transition metal and benzophenone molar ratio is less than 1:5, effects of enhancement in intrinsic viscosity of produced polyketone is not satisfactory, and if transition metal and benzophenone molar ratio is more than 1:100, catalyst activity of produced polyketone tends to decrease.

Diameter of the glass fiber is preferably 10 to 13 nm. If diameter of glass fiber is less than 10 nm, glass fiber form is changed, thereby mechanical properties decline. In regard of content added compared to 100 parts by weight of polyketone terpolymer 30 to 35 parts by weight is preferably included. If content of glass fiber is less than 30 parts by weight, mechanical strength can be decreased, and if it is more than 35 parts by weight, viscosity drastically increase, thereby extrusion and injection workability decrease and exterior quality decline.

The flame retardant comprises 2 to 20 parts by weight compared to 100 parts by weight of polyketone terpolymer. If flame retardant is less than 2 parts by weight, flame resistance declines, and if flame retardant is more than 20 parts by weight, flame resistance is excellent but price increase and mechanical properties can be declined. Meanwhile, types of flame retardant used are halogen-based retardant, phosphorus-based retardant, hydrated metal compound, silicone compound, silicate, alkali metal salt, melamine-based flame retardant.

The other additives is added to increase processability or properties of polyketone terpolymer, and can comprise antioxidant, stabilizer, filter, fire resisting material, parting agent, coloring, and etc. By extrusion molding or injection molding the polyketone, office polyketone partition frame can be produced. In this case, polyketone of the office polyketone partition frame has strong shock resistance, in polyketone base state, measured impact strength is 20 $kJ/m^2$ or more.

The present invention provides box frame produced by injection molding blend comprising 10 to 40 weight% of glass fiber and 60 to 90 weight% of linear alternative polymer comprising carbon monoxide and at least one kind of olefin-based unsaturated hydrocarbon, palladium catalyst remaining amount is 5 to 50 ppm, molecular weight distribution

is 1.5 to 2.5.

In this case, diameter of the glass fiber is preferably 10 to 15 nm, but it is not limited thereto. If diameter is less than 10 nm, glass fiber form is changed and can decrease mechanical properties.

Also, the glass fiber composition compared to the total composition ratio is preferably 10 to 40 weight%. In case of composition ratio of the glass fiber is less than 10 weight%, mechanical strength can be declined, in case of composition ratio of the glass fiber is more than 40 weight%, problem such as degradation of excursion and injection workability.

ABS (Acrylonitrile-Butadiene-Styrene) is copolymer obtained by polymerizing acrylonitrile, butadiene, and styrene. It is light ivory-colored solid, easily coloring and good in surface gloss, excellent in mechanical and electrical properties and chemical properties, and mainly used as surface material of home and office electronic products and surface material of automobile.

In the present invention, ABS comprises butadiene of 50 to 80%. Preferably, ABS comprising butadiene of 60 to 70% is used.

In manufacturing method, it is general to blend copolymer of acrylonitrile and butadiene and copolymer of styrene and butadiene, composition resin having simultaneously each property of copolymer is obtained. If copolymer component combination is different, performance of product subtly changes and combination changes according to use. Generally, it is easily processed, has greater shock resistance and good heat-resisting property.

According to the present invention, content of ABS is compared to total weight 5 to 35 weight%. Preferably, 10 to 30 weight%, and more preferably 15 to 25 weight%. If the content of ABS is less than 5 weight%, impact strength is low and wheel cover is not appropriate, and if 35 weight% or more, chloride calcium resistance which is a feature of polyketone becomes low and processability becomes not good.

In the present invention, in order to reinforce the linear alternative polyketone heat-resisting property, by mixing nylon 61, polyketone resin composition is produced, and amount of added nylon 61 is preferably 5 to 20 weight% compared to 50 to 74.5 weight% of polyketone copolymer. If it does not reach 5 weight%, heat-resisting property is not excellent, and if it is more than 20 weight%, problems such as declining of polyketone shock resistance and abrasion resistance occur. Preferable content is 10 weight% compared to 50 to 74.9 weight% of polyketone copolymer.

In the present invention, in order to reinforce mechanical properties such as shock resistance of the linear alternative polyketone, silane additive is inserted. The silane additive is preferably inserted 0.1 to 10 weight% compared to 50 to 74.9 weight% of copolymer. If it does not reach 0.1 weight%, mechanical properties are not good, and if it is more than 10 weight%, mechanical properties do not enhance any more. Most preferable amount of additives is 0.3 weight% compared to 70 to 80 weight% of polyketone copolymer.

In the present invention, green juicer screw adheres food ingredients to filter installed in device case for grinding or extraction, and in terms of screw grinding and extracting food ingredients, the screw is divided into joint having axis of rotation combining device for grinding or extraction, carrying section formed consecutively in the joint and carries food ingredients, grinding section grinding food ingredients carried by the carrying unit, and compression section compressed food ingredients grinded by the grinding section, each of the section consecutively formed a plurality of spiral blade for carrying, grinding, and compressing food ingredients, spiral blade of the grinding section is formed at least two stage.

Also, spiral blade of the grinding section among at least two stage, stage formed in the front is formed lower than stage formed in the rear, the rear of spiral blade of the grinding section is formed downward sidling. One side of spiral blade of the grinding section is projecting in front and another side is formed sidling in the rear. Moreover it can comprise stepped portion supporting the grinding or extraction formed in end of the combination. Also, the material comprising screw uses polyketone composition blending polyketone and glass fiber.

The following statement describes manufacturing method for producing polyketone composition product of the present invention.

Manufacturing method according to the present invention comprises a step of preparing catalyst composition comprising palladium compound, acid with 6 or less pKa, bidentate ligand compound of phosphorus; a step of preparing mixed solvent(polymerization solvent) comprising alcohol(for example, methanol) and water; a step of producing linear terpolymer of carbon monoxide, ethylene, and propylene in process of polymerization under the presence of the catalyst composition and mixed solvent; a step of yielding polyketone polymer by removing remained catalyst composition with solvent(for example, alcohol and acetone) in the linear terpolymer; a step of producing blend by mixing and compressing the polyketone polymer of 60 to 90 weight% and glass fiber of 10 to 40 weight%; and a step of injection molding the blend, but it is not limited thereto.

For the palladium compound comprising the catalyst composition, palladium acetate can be used, and the amount is preferably 10-3 to 10-1, but it is not limited thereto.

In addition, for acid having 6 or less pKa value comprising the catalyst composition is in group of trifluoro acetate, p-toluenesulfonic acid, sulfuric acid, and sulfonic acid, one or more kind selected, preferably trifluoro acetate can be used, and the amount is preferably 6 to 20 mol equivalent to palladium compound.

Moreover, the bidentate ligand compound of the phosphorous comprising the catalyst composition is ((2,2-dimethyl-1,3-dioxane-5,5-diyl)bis(methylene))bis(bis(2-methoxyphenyl)phosphine), and the amount is preferably 1 to 20 (mol) equivalent to palladium compound.

The carbon monoxide, ethylene and propylene liquefied polymerized in mixed solvent of alcohol (for example, methanol) and water, and produces linear terpolymer, for the mixed solvent, methanol 100 parts by weight and water 2 to 10 parts by weight can be used. If content of water in mixed solvent is less than 2 parts weight, ketal is formed and thermal stability can be declined in process, and if it is more than 10 parts by weight, mechanical properties of product can be declined.

Also, in the polymerization, reaction temperature is preferably 50 to 100°C and reaction pressure is preferably 40 to 60 bar. Produced polymer is retrieved through filtering and cleaning process after polymerization, and remained catalyst composition is removed by solvent such as alcohol or acetone.

Content of Pd element in polyketone of the present invention is preferably 50 ppm or less. If content of Pd element is more than 50 ppm, thermal degeneration and chemical degeneration can be easily occurred, in case of melting molding, viscosity of melting increases, and in case of dissolving in solvent, viscosity of doped material increases and workability becomes poor. Also in polyketone molding product obtained after molding, much Pd element is remained, thereby heat-resisting property in molding product becomes poor. Content of Pd element among polyketone is the lower the better in aspect of process passing property and heat-resisting property of molding product, preferably 10 ppm or less, and more preferably 5 ppm or less, and most preferably 0 ppm.

In the present invention, the obtained polyketone polymer is mixed with glass fiber, compressed with extruder, and finally obtains blend composition. The blend is inserted to biaxial extruder and produced by melting, mixing, and pressing.

In this case, extrusion temperature is preferably 230°C to 260°C, and rotation speed of screw is preferably in realm of 100 to 300 rpm. If extrusion temperature is less than 230°C, mixing cannot occur properly, and if extrusion temperature is more than 300 rpm, glass fiber is destroyed and mechanical properties can decline.

Blend is produced according to the method, by pressing molding or injection molding, polyketone composition product can be produced.

Gasket for accumulator according to the present invention has effects of increasing heat-resisting property and properties maintenance rate. Specifically, the gasket for accumulator has less than 1.0% water-absorption rate in 50 °C and relative humidity 90% RH, and dimensional change rate is less than 0.3% after processing 24 hours in 85°C and relative humidity 85% RH

The present invention provides gasket for alkali battery produced by injection molding blend of 20 to 30 weight% of nylon 6, 10 to 15 weight% of rubber and 55 to 70 weight% of linear alternative polyketone polymer comprising carbon monoxide and at least one kind of olefin-based unsaturated hydrocarbon, which palladium catalyst remaining amount in the polyketone polymer is 50ppm or less, and molecular weight of the polyketone polymer distribution is 1.5 to 2.5.

The gasket for alkali battery according to the present invention is immersed for 7 days in 30°C, and water-absorption rate is less than 4%.

Robot cleaner gear according to the present invention injection molded polyketone polymer through mold of tooth type. Conditions of the injection molding are 70 to 80 bar of pressure, 230 to 260°C of temperature, and under mold temperature condition of 150°C are preferable. If injection temperature is less than 230°C, mixing could not occur properly, and if injection temperature is more than 260°C, problems such as heat-resisting property of resin can occur.

The present invention provides box frame produced by injection molding blend comprising glass fiber 15 to 40 weight% and linear alternative polyketone polymer 60 to 85 weight% comprising carbon monoxide and at least one kind of olefin-based unsaturated hydrocarbon, palladium catalyst remaining amount is 5 to 50 ppm, and molecular weight distribution is 1.5 to 2.5.

Hereinafter, specific examples and a more detailed description of the configuration and effects of the present invention as well as comparative examples are given, these embodiments are provided just for understanding more clearly the present invention and are not intended to limit the scope of the invention. The detailed description of the present invention, by the non-limiting Examples below.

<u>Example 1</u>

Linear alternative polyketone terpolymer comprising carbon monoxide and ethylene and propene, under presence of catalyst composition produced from palladium acetate, trifluoro acetate, and 1,3-bis[bis(2-methoxyphenyl-phosphino]propane is produced. In the produced polyketone terpolymer, ethylene and propane molar ratio is 85 to 15. Also, the melting point of the polyketone terpolymer is 220°C, LVN measured by HFIP (hexa-fluoroisopropanol) in 25°C is 1.3 dl/g, and MI (Melt index) is 48 g / 10 min. The produced polyketone terpolymer of 70 weight% and glass fiber of 30 weight% operates by 250 rpm in diameter of 2.5 cm, by using biaxial screw of L/D=32, on extruder, therefore pellet is produced.

Comparative Example 1

Resin produced by blending polyamide 66 and glass fiber of 30 weight% as material of conventional DuPont company.

Property Evaluation

After producing specimen by injection molding polyketone resin composition pellet, compared to product of comparative example, property is evaluated as follows, the result is shown in the following table 1.

1) Tensile strength: operated based on ASTM D638

2) Flexural strength: operated based on ASTM D790

3) After water absorption, tensile strength and flexural strength maintenance rate

4) Specimen produced based on ASTM D638 and D79056 is processed for 48 hours in 50°C and in 90% RH, tensile strength and flexural strength maintenance rate is evaluated.

Property evaluation of example and comparative example is as following table 1.

**Table 1**

| | Example 1 | Comparative Example 1 |
|---|---|---|
| Composition | Polyketone+glass fiber (30 weight%) | Nylon66+glass fiber (30 weight%) |
| Tensile strength (MPa) | 160 | 175 |
| Flexural strength (MPa) | 230 | 235 |
| Water absorption | 1.0% | 3.0% |
| After water absorption, tensile strength (maintenance rate %) | 138 (89%) | 98 (56%) |
| After water absorption, flexural strength (maintenance rate) | 198 (86%) | 122 (52%) |

Conditions of water absorption: 50°C, 90% RH, 48 hr processing

As shown in Table 1, in case of Example 1 compared to comparative example 1, water resorption is low and properties maintenance rate after water absorption is evaluated excellent.

Example 2

Linear alternative polyketone terpolymer comprising carbon monoxide and ethylene and propene, under presence of catalyst composition produced from palladium acetate, trifluoro acetate, and ((2,2-dimethyl-1,3-dioxane-5,5-diyl)bis(methylene))bis(bis(2-methoxyphenyl)phosphine) is produced. In the produced polyketone terpolymer, ethylene and propane molar ratio is 46 to 4. Also, the melting point of the polyketone terpolymer is 220°C, LVN measured by HFIP (hexa-fluoroisopropanol) in 25°C is 1.4 dl/g, and MI (Melt index) is 48 g/10 min. The produced polyketone terpolymer operates by 250 rpm in diameter of 2.5 cm, by using biaxial screw of L/D=32, on extruder, therefore pellet is produced, and by injection molding specimen of tube fixing clip for attaching to car body is produced.

Comparative Example 2

Except for using Nylon 66 material and producing, it is the same as Example 2.

Properties Evaluation

Tensile strength, elongation at break, flexural strength, flexural modulus and impact strength of the specimens

of Examples and Comparative Examples were evaluated by forced wet evaluation with ME/ES Spec (MS211-44).

**Table 2**

| Analysis item | Unit | PK example 2 | | | NY66 comparative example 2 | | |
|---|---|---|---|---|---|---|---|
| | | 0 hr | 240 hrs | Retention rate | 0 hr | 240 hrs | Retention rate |
| Tensile strength | MPa | 60 | 60 | 100% | 80 | 38 | 48% |
| Elongation at break | % | 250 | 110 | 44% | 40 | 290 | 725% |
| Flexural strength | MPa | 60 | 54 | 90% | 110 | 32 | 29% |
| Flexural modulus | MPa | 1,400 | 1,000 | 71% | 2,900 | 590 | 20% |
| Impact strength | $KJ/m^2$ | 10 | 15 | 150% | 6.5 | NB | - |

According to Table 2, compared to the comparative example, in Example 1, the tensile strength and flexural strength were maintained at 100% and 90% in the forced wet evaluation, and the decrease rate in the forced wet evaluation was 20% or less, and the retention rate of flexural modulus was 71 %, and the rate of decrease in flexural modulus was 30% or less. Thus, the polyketone of the present invention is superior to nylon 66 for use as a clip and holder for body attachment and tube fixing.

Example 3

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g /10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for connector.

Example 4

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for connector.

Example 5

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min and the MWD was 2.0. The polyketone terpolymer prepared above was molded into pellets on an extruder using a twin screw having a diameter of 40 mm and L/D = 32, which was operated at 250 rpm, and then injection molded to produce a specimen for connector.

Example 6

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 1.8. The polyketone terpolymer prepared above was molded into pellets on an extruder using a twin screw having a diameter of 40 mm and L/D = 32, which was operated at 250 rpm, and then injection molded to produce a specimen for connector.

Example 7

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g/10 min and the MWD was 2.2. The polyketone terpolymer prepared above was molded into pellets on an extruder using a twin screw having a diameter of 40 mm and L/D = 32, which was operated at 250 rpm, and then injection molded to produce a specimen for connector.

Comparative Example 3

Specimens were prepared in the same manner as in Example 3 except that Polyamide 66 (PA 66) was used as a material of DuPont.

Comparative Example 4

Specimens were prepared in the same manner as in Comparative Example 3 except that polybutylene terephthalate (PBT) was used as a material of Samyang Corporation.

Properties Evaluation

The pellets prepared in Examples 3 to 7 and Comparative Examples 3 and 4 were injection molded to prepare connector specimens, and the properties were evaluated in the following manner. The results are shown in Table 3 below.

1. Flexural modulus: It was conducted according to ASTM D790 under the forced wet condition of USCAR CLASS III. USCAR CLASS III Forced wet conditions: 95% RH, 145°C × 1008 hr (ambient temp. Range from -40°C to 125°C and potential peak temp is 145°C)

2. Ring-on-Ring Type (Resin): A through-type specimen having an outer diameter of 25.6 mm, an inner diameter of 20 mm and a height of 15 mm was injection-molded and fixed to a test apparatus. The test is carried out under driving conditions with a linear velocity of 10 cm/s. At this time, non-abrasion amount was calculated using the following formula to evaluate abrasion resistance. The smaller the amount of non-abrasion obtained, the better the abrasion resistance.

Non-wear amount = Wear weight (mg) / [Density (mg / mm3) X Pressure load (kgf) X Travel distance (km)]

* Test equipment: Trust type (Friction type abrasion tester)

**Table 3**

| Evaluation items | Comparative Example 3 | Comparative Example 4 | Example 3 | Example 4 | Example 5 | Example 6 | Example 7 |
|---|---|---|---|---|---|---|---|
| Rate of decrease in flexural modulus (%) | 73 | 62 | 21 | 23 | 22 | 21 | 22 |
| Wear amount ($mm^3/kg/km$) | 10.2 | 11.2 | 0.60 | 0.62 | 0.63 | 0.61 | 0.60 |

As shown in Table 3, in Examples 3 to 7, the rate of decrease of the flexural modulus was low in the forced wet evaluation evaluation as compared with Comparative Examples 3 and 4, and it is more suitable as a polyketone connector than conventional connectors because of low abrasion resistance.

Example 8

In the presence of the catalyst composition consisting of palladium acetate, anion of trifluoroacetic acid and (2,2-dimethyl-1,3-dioxane-5,5-diyl) bis (methylene)) bis (bis (2-methoxyphenyl) phosphine), the linear terpolymer of carbon monoxide, ethylene and propylene was polymerized in a solvent of 70 to 90 ° C in the presence of 5 parts by weight of water relative to 100 parts by weight of methanol. The molar ratio of ethylene to propene in the polyketone terpolymer prepared above was 46:4. On the other hand, the melting point of the polyketone terpolymer was 220°C, and the intrinsic viscosity (LVN) measured on 1,1,1,3,3,3-HFIP was 1.4 dl/g.

70 wt% of the polyketone terpolymer prepared above and 30 wt% of para-aramid staple were blended to prepare a polyketone composition.

Example 9

The same as in Example 8 except that 60 wt% of polyketone terpolymer and 40 wt% of para-aramid staple were used.

Example 10

The same as in Example 8 except that 80 wt% of polyketone terpolymer and 20 wt% of para-aramid staple were used.

Comparative Example 5

A specimen was prepared in the same manner as in Example 8 except that 80 wt% of PA66 of RADO Co. and 20 wt% of para-aramid staple were used.

Properties Evaluation

The prepared polyketone compositions of the above examples were prepared as test pieces, and the properties were evaluated by the following methods in comparison with the products of the comparative examples. The results are shown in Table 4 below.

1. Evaluation of water resistance: After holding the specimen for 30 days at 90 °C and relative humidity of 95% RH, the maintenance rate of tensile strength before and after standing was evaluated according to ASTM D638.

**Table 4**

| | Example 8 | Example 9 | Example 10 | Comparative Example 5 |
|---|---|---|---|---|
| Furtherance | PK70%/ Para-aramid 30% | PK60%/ Para-aramid 40% | PK80%/ Para-aramid 20% | PK100% |
| the maintenance rate of tensile strength (%) | 80 | 81 | 85 | 40 |

As shown in Table 4, in the case of Examples, water resistance was superior to Comparative Example 5.

Therefore, the polyketone compositions prepared in Examples 8 to 10, rather than Comparative Example 5, were evaluated to be suitable for use as thermoplastic plastics for use in the bar industry having excellent water resistance.

Example 11

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g/10 min and the MWD was 2.0.

70 wt% of the polyketone terpolymer, 22 wt% of glass fiber and 8 wt% of a flame retardant were put into an extruder using a twin-screw extruder of L/D32 and D40 and extruded through melt-kneading at a temperature of 240°C and a screw rotation speed of 250 rpm to prepare pellets, and then injection molded to produce a specimen for switch. After that, the physical properties were evaluated by the following methods, and the results are shown in Table 5 below.

Example 12

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g/10 min and the MWD was 2.0.

70 wt% of the polyketone terpolymer, 22 wt% of glass fiber and 8 wt% of a flame retardant were put into an extruder using a twin-screw extruder of L/D32 and D40 and extruded through melt-kneading at a temperature of 240°C and a screw rotation speed of 250 rpm to prepare pellets, and then injection molded to produce a specimen for switch. After that, the physical properties were evaluated by the following methods, and the results are shown in Table 5 below.

Example 13

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g /10 min and the MWD was 2.0.

70 wt% of the polyketone terpolymer, 22 wt% of glass fiber and 8 wt% of a flame retardant were put into an extruder using a twin-screw extruder of L/D32 and D40 and extruded through melt-kneading at a temperature of 240°C and a screw rotation speed of 250 rpm to prepare pellets, and then injection molded to produce a specimen for switch. After that, the physical properties were evaluated by the following methods, and the results are shown in Table 5 below.

Example 14

70 wt% of the polyketone terpolymer from Example 2, 28 wt% of glass fiber and 2 wt% of a flame retardant were put into an extruder using a twin-screw extruder of L/D32 and D40 and extruded through melt-kneading at a temperature of 240°C and a screw rotation speed of 250 rpm to prepare pellets, and then injection molded to produce a specimen for switch. After that, the physical properties were evaluated by the following methods, and the results are shown in Table 5 below.

Example 15

65 wt% of the polyketone terpolymer from Example 2, 15 wt% of glass fiber and 20 wt% of a flame retardant were put into an extruder using a twin-screw extruder of L/D32 and D40 and extruded through melt-kneading at a temperature of 240°C and a screw rotation speed of 250 rpm to prepare pellets, and then injection molded to produce a specimen for switch. After that, the physical properties were evaluated by the following methods, and the results are shown in Table 5 below.

Comparative Example 6

Specimens of switch were prepared using 67 wt% of PA66 of Rhodda Co. and 33 wt% of glass fiber and A218V30.

Properties Evaluation

The manufactured pellets of the above examples were injection molded to produce industrial switch specimens. The properties of the industrial switch specimens were evaluated in the following manner in comparison with the products of the comparative examples. The results are shown in Table 5 below.

1. Evaluation of moisture absorption: Measurement of moisture content after treatment for 24 hours at a temperature of 50°C and a relative humidity of 90%

2. Evaluation of properties maintenance rate:

   1) Treatment at 50°C and 90% relative humidity for 24 hours

   2) Tensile properties evaluation: tensile strength measurement according to ASTM D638

   3) Calculate the maintenance rate from physical properties immediately after injection

**Table 5**

| Item | Example 11 | Example 12 | Example 13 | Example 14 | Example 15 | Comparative Example 6 |
|---|---|---|---|---|---|---|
| moisture absorption rate | 0.50% | 0.45% | 0.47% | 0.44% | 0.53% | 3.0% |
| properties maintenance rate | 83% | 85% | 84% | 81% | 80% | 50% |

As shown in Table 5, the water absorption rate of the Example was lower than that of Comparative Example 6, and the properties maintenance rate was significantly higher. Particularly, the moisture absorption rate was less than 1.0% and the tensile strength maintenance rate (properties maintenance rate) after moisture absorption was 80% or more. Thus, the specimens prepared through the examples rather than the comparative examples were found to be more advantageous for use as industrial parts and switches.

Example 16

In the presence of the catalyst composition consisting of palladium acetate, anion of trifluoroacetic acid and (2,2-dimethyl-1,3-dioxane-5,5-diyl) bis (methylene)) bis (bis (2-methoxyphenyl) phosphine), the linear terpolymer of

carbon monoxide, ethylene and propylene was polymerized in a mixed solvent consisting of 80% by volume of acetic acid and 20% by volume of water at 70 to 90°C. The molar ratio of ethylene to propene in the polyketone terpolymer prepared above was 85:15. On the other hand, the melting point of the polyketone terpolymer was 220°C, and the intrinsic viscosity (LVN) measured on 1,1,1,3,3,3-HFIP was 1.4 dl/g.

70 wt% of the polyketone terpolymer, 22 wt% of glass fiber and 8 wt% of a flame retardant were put into an extruder using a twin-screw extruder of L/D32 and D40 and extruded through melt-kneading at a temperature of 240°C and a screw rotation speed of 250 rpm to prepare pellets, and then injection molded to produce a specimen for bobbin. After that, the physical properties were evaluated by the following methods compared to the products of Comparative Example, and the results are shown in Table 6 below.

Example 17

The same as in Example 16 except that 70 wt% of the polyketone terpolymer, 28 wt% of glass fiber and 2 wt% of a flame retardant were used.

Example 18

The same as in Example 16 except that 60 wt% of the polyketone terpolymer, 20 wt% of glass fiber and 20 wt% of a flame retardant were used.

Comparative Example 7

PA66 Glass Fiber 33% of Rhodia Co. and A218V30 products were used.

Properties Evaluation

The prepared pellets of the above examples were injection-molded to prepare bobbin specimens. The properties of the specimens were evaluated in the following manner in comparison with the products of the comparative examples, and the results are shown in Table 6 below.

1. Evaluation of moisture absorption: Measurement of moisture content after treatment for 24 hours at a temperature of 50°C and a relative humidity of 90%

2. Evaluation of properties maintenance rate:

    1) Treatment at 50°C and 90% relative humidity for 24 hours

    2) Tensile properties evaluation: tensile strength measurement according to ASTM D638

    3) Calculate the maintenance rate from physical properties immediately after injection 3. Evaluation of dimensional change rate

Treated at 300°C for 2 hours by ASTM D-638, and the width of the parallel portion of the specimen for bobbin before and after the treatment was measured by a slide caliper to observe the dimensional change.

**Table 6**

| Item | Example 16 | Example 17 | Example 18 | Comparative Example 7 |
|---|---|---|---|---|
| moisture absorption rate | 0.45% | 0.47% | 0.46% | 3.0% |
| properties maintenance rate (tensile strength) | 85% | 83% | 81% | 50% |
| dimensional change rate | 1.2% | 1.3% | 1.5% | 5.2% |

As shown in Table 6, in the case of Examples, the moisture absorption rate was low and the properties maintenance rate was higher than the comparative example.

Therefore, it was found that the bobbins manufactured through the examples were more advantageous for use as the bobbins for the electronic devices than the comparative examples.

Example 19

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g/10 min and the MWD was 2.0.

A composition manufactured by mixing 70 wt% of the polyketone terpolymer and 30 wt% of glass fiber was molded into pellets on an extruder using a twin screw having a diameter of 2.5 cm and L/D = 32, which was operated at 250 rpm, and then injection molded to produce a specimen for chain. The prepared test specimen was injection-molded on a molding machine having a mold clamping force of 80 tons to prepare a specimen for a chain, and then the tensile strength was measured by the test method of ASTM D638, and the tensile strength after moisture absorption was also measured.

Example 20

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g/10 min and the MWD was 2.0.

A composition manufactured by mixing 70 wt% of the polyketone terpolymer and 30 wt% of glass fiber was molded into pellets on an extruder using a twin screw having a diameter of 2.5 cm and L/D = 32, which was operated at 250 rpm, and then injection molded to produce a specimen for chain. The prepared test specimen was injection-molded on a molding machine having a mold clamping force of 80 tons to prepare a specimen for a chain, and then the tensile strength was measured by the test method of ASTM D638, and the tensile strength after moisture absorption was also measured.

Example 21

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g/10 min and the MWD was 2.0.

A composition manufactured by mixing 70 wt% of the polyketone terpolymer and 30 wt% of glass fiber was molded into pellets on an extruder using a twin screw having a diameter of 2.5 cm and L/D = 32, which was operated at 250 rpm, and then injection molded to produce a specimen for chain. The prepared test specimen was injection-molded on a molding machine having a mold clamping force of 80 tons to prepare a specimen for a chain, and then the tensile strength was measured by the test method of ASTM D638, and the tensile strength after moisture absorption was also measured.

Example 22

Specimen for chain was prepared in the same manner as in Example 2 except that 50 wt% of the polyketone terpolymer of Example 20 and 50 wt% of the glass fiber were used.

Example 23

Specimen for chain was prepared in the same manner as in Example 2 except that 90 wt% of the polyketone terpolymer of Example 20 and 10 wt% of the glass fiber were used.

Comparative Example 8

PA66 Glass Fiber 33% of Rhoda Co., A218V30 product were used.

The properties of Examples and Comparative Examples were as shown in Table 1 below.

Evaluation of properties maintenance rate:

1) Treatment at 50°C and 90% relative humidity for 24 hours

2) Tensile properties evaluation: tensile strength measurement according to ASTM D638

3) Calculate the maintenance rate from physical properties immediately after injection

**Table 7**

| Test Items | Example 19 | Example 20 | Example 21 | Example 22 | Example 23 | Example 8 |
|---|---|---|---|---|---|---|
| The tensile strength Before moisture absorption (MPa) | 160 | 162 | 161 | 150 | 169 | 186 |
| The tensile strength after moisture absorption (MPa) | 115 | 120 | 122 | 105 | 120 | 90 |
| Maintenance rate (%) | 72 | 74 | 76 | 70 | 71 | 48 |

As shown in Table 7, the tensile strength maintenance rate after moisture absorption was superior to the comparative example in Examples, and the tensile strength after moisture absorption was greatly reduced in Comparative Examples.

The chain for treating wastewater sludge is required to maintain mechanical properties after moisture absorption, and the chain produced by the Example of the present invention is very suitable for application as a chain for treating wastewater sludge which is excellent in properties maintenance after moisture absorption.

Example 24

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g/10 min and the MWD was 2.0. A blend consisting of 90 wt% of the polyketone terpolymer prepared above and 10 wt% of Rubber (EPDM) was molded into pellets on an extruder using a twin screw having a diameter of 40 mm and L/D = 32, which was operated at 250 rpm, and then injection molded to produce a specimen for cable tie.

Example 25

A specimen of cable tie was produced through the same procedure as in Example 24 except that a blend containing 95 wt% of a polyketone terpolymer and 5 wt% of a rubber was used

Comparative Example 9

Nylon 66 resin was molded into a pellet on an extruder using a twin screw having a diameter of 40 cm and operated at 250 rpm and L/D = 32, and then injection molded to produce a specimen of cable tie.

Properties Evaluation

The properties of the specimens prepared in Examples 24 and 25 and Comparative Example 9 were evaluated by the following methods. The results are shown in Table 8 below.

1. Minimum operating temperature: measured according to UL 62275, PASS for temperatures below -40°C, and NG for temperatures above -40°C.

2. Evaluation of water resistance properties maintenance rate: The specimens were treated under standard conditions (25 °C, 65% RH relative humidity, 24 hours) and high temperature and high humidity condition (50°C, 90% RH, 24 hours), according to ASTM D256 , and the average value of the measured values in five vertical and horizontal directions was taken for each treated sample.

3. Evaluation of moisture absorptivity: The water content was measured after treatment for 24 hours at a temperature of 50°C and a relative humidity of 90%.

**Table 8**

| | Example 24 | Example 25 | Comparative Example 9 |
|---|---|---|---|
| Minimum operating temperature (-40°C) | Pass | Pass | NG |
| Product water resistance (%, properties maintenance rate) | 85 | 90 | 45 |
| Product moisture absorption rate (%, 50°C, 90% RH) | 0.9 | 0.8 | 3.0 |

As can be seen from the above Table 8, the examples showed improved water resistance (properties maintenance rate of 85% or more) and product moisture absorption rate (less than 1.0%) as compared with the comparative example.

Example 26

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g / 10 min, the MWD was 2.0 and the residual amount of palladium was 5 ppm. The polyketone terpolymer prepared above was molded into pellets on an extruder using a twin screw having a diameter of 40 mm and L/D = 32, which was operated at 250 rpm, and then injection molded to produce a specimen for drinking water parts.

Example 27

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 2.0 and the residual amount of palladium was 3 ppm. The polyketone terpolymer prepared above was molded into pellets on an extruder using a twin screw having a diameter of 40 mm and L/D = 32, which was operated at 250 rpm, and then injection molded to produce a specimen for drinking water parts.

Example 28

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min, the MWD was 2.0 and the residual amount of palladium was 4 ppm. The polyketone terpolymer prepared above was molded into pellets on an extruder using a twin screw having a diameter of 40 mm and L/D = 32, which was operated at 250 rpm, and then injection molded to produce a specimen for drinking water parts.

Example 29

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 1.8 and the residual amount of palladium was 5 ppm. The polyketone terpolymer prepared above was molded into pellets on an extruder using a twin screw having a diameter of 40 mm and L/D = 32, which was operated at 250 rpm, and then injection molded to produce a specimen for drinking water parts.

Example 30

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 2.2 and the residual amount of palladium was 6 ppm. The polyketone terpolymer prepared above was molded into pellets on an extruder using a twin screw having a diameter of 40 mm and L/D = 32, which was operated at 250 rpm, and then injection molded to produce a specimen for drinking water parts.

Example 31

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 2.0 and the residual amount of palladium was 7 ppm. A blend consisting 70 wt% of the polyketone terpolymer prepared above and 30 wt% of glass fiber was molded into pellets on an extruder using a twin screw having a diameter of 40 mm and L/D = 32, which was operated at 250 rpm, and then injection molded to produce a specimen for drinking water parts.

Comparative Example 10

A blend consisting 70 wt% of nylon6 and 30 wt% of glass fiber was molded into pellets on an extruder using a twin screw having a diameter of 40 cm and L/D = 32, which was operated at 250 rpm, and then injection molded to produce a specimen for drinking water parts.

Properties Evaluation

The physical properties of the specimens prepared in Examples 26 to 31 and Comparative Example 10 were evaluated by the following methods, and the results are shown in Table 9 below.

1. Impact strength: Performed according to ASTM D256.

2. Evaluation of water resistance properties maintenance rate: The specimens were treated under standard conditions (25 °C, 65% RH relative humidity, 24 hours) and high temperature and high humidity condition (50°C, 90% RH, 24 hours), according to ASTM D256, and the average value of the measured values in five vertical and horizontal directions was taken for each treated sample.

3. Evaluation of moisture absorptivity: The water content was measured after treatment for 24 hours at a temperature of 50°C and a relative humidity of 90%.

**Table 9**

| | Example 26 | Example 27 | Example 28 | Example 29 | Example 30 | Example 31 | Comparative Example 10 |
|---|---|---|---|---|---|---|---|
| Properties | IV: 1.2 MWD 2.0 | IV: 1.4 MWD : 2.0 | IV: 1.6 MWD : 2.0 | IV: 1.4 MWD : 1.8 | IV: 1.4 MWD : 2.2 | POK+GF | NY6+GF |
| Impact Strength ($kJ/m^2$) | 11 | 14 | 17 | 15 | 15 | 15 | 5 |
| Product water resistance (%, properties maintenance rate | 85 | 86 | 87 | 89 | 90 | 90 | 52 |
| Product moisture absorption rate (%, 50°C, 90% RH) | 1.0 | 0.9 | 1.1 | 1.2 | 1.3 | 1.2 | 3.0 |

As can be seen from Table 9, the water resistance and impact strength of the examples were improved compared with the comparative examples. Particularly in the case of the example of the present invention, when the impact strength is 10 $kJ/m^2$ or more, 50°C and relative humidity is 90% RH, the moisture absorption rate is less than 1.5%, and the impact strength measured at 50°C and 90% RH is 85% or more of impact strength measured at 25°C and 65% RH, which is excellent.

Example 32

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g and the Melt index was 60 g / 10 min. 70 wt% of the polyketone terpolymer prepared above and 30 wt% of mineral filler were molded into pellets on an extruder using a twin screw having a diameter of 40 mm and L/D = 32, which was operated at 250 rpm, and then injection molded to produce a specimen for automobile fuel inlet.

Example 33

The same as Example 32 except that 80 wt% of polyketone terpolymer and 20 wt% of mineral filler were used.

Example 34

The same as Example 32 except that 90 wt% of polyketone terpolymer and 10 wt% of mineral filler were used.

Comparative Example 11

60 wt% of Polyamide 66 (PA 66) and 40 wt% of mineral filler were measured as the materials of DuPont, and the properties maintenance rate after moisture absorption was measured.

Properties Evaluation

The prepared pellets of the above Examples were injection-molded to prepare test specimens for an automobile fuel inlet. The properties of the specimens were evaluated in the following manner in comparison with the products of the comparative examples, and the results are shown in Table 10 below.

1. Evaluation of strain rate: Evaluated according to MS211-47 for vertical and horizontal directions at a temperature of 50°C and a relative humidity of 90%.

2. Evaluation of weight change rate: Evaluation was made according to MS211-47 at a temperature of 50°C and a relative humidity of 90%.

3. Evaluation of properties maintenance rate of water resistance : Mechanical properties were measured by ME / ES SPEC (MS211-47) after treatment at a temperature of 50°C and a relative humidity of 90% for 500 hours.

**Table 10**

| Item | Unit | Comparative Example 11 | Example 32 | Example 33 | Example 34 |
|---|---|---|---|---|---|
| Evaluation of strain rate (Vertical, 50°C, Relative humidity 90%) | % | 0.3 | 0.05 | 0.07 | 0.10 |
| Evaluation of strain rate (Horizontal, 50°C, Relative humidity 90%) | % | 0.25 | 0.02 | 0.04 | 0.07 |
| Weight change rate (50°C, Relative humidity 90%) | % | 6.5 | 0.95 | 1.00 | 1.95 |
| Properties maintenance rate of water resistance (tensile strength, 50°C, Relative humidity 90%) | MPa | 39 | 63 | 59 | 56 |
| Properties maintenance rate of water resistance (Flexural strength, 50°C, Relative humidity 90%) | MPa | 65 | 95 | 96 | 97 |
| Properties maintenance rate of water resistance (Flexural modulus, 50°C, Relative humidity 90%) | MPa | 1980 | 2310 | 2320 | 2360 |
| Properties maintenance rate of water resistance (Impact Strength, 50°C, Relative humidity 90%) | $KJ/m^2$ | 6.4 | 7.1 | 8.0 | 8.3 |

As shown in Table 10, in the case of Examples, the strain rate was low in the evaluation of the product strain rate in the vertical direction and the horizontal direction as compared with the comparative example, and the product weight change rate was also lower than the comparative example, so it was evaluated as excellent. Therefore, the automobile fuel inlet manufactured through the example of the present invention is excellent in water resistance and dimensional stability, and is thus suitable for application as an automobile fuel inlet.

Example 35 to 37

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). The molar ratio of ethylene to propene in the polyketone terpolymer prepared above was 46 : 4. The melting point of the polyketone terpolymer was 220°C, the LVN measured at 25 °C by HFIP (hexa-fluoroisopropanol) was 1.3 dl/g and the Melt index was 48 g / 10 min. 60 wt% of the polyketone terpolymer prepared above and 40 wt% of glass fiber were molded into pellets on an extruder using a twin screw having a diameter of 2.5 cm and L/D = 32, which was operated at 250 rpm, and then injection molded to produce a specimen for Outside mirror frame and properties maintenance rate was evaluated.

Outside mirror frame was prepared by injection molding a polyketone composition containing 50 wt% of polyketone and 50 wt% of glass fiber and a polyketone composition containing 40 wt% of polyketone and 60 wt% of glass fiber in a same way.

Comparative Example 12 to 13

The impact strength and the properties maintenance rate of a polyamide 6 (PA 6) of 50 wt%, a glass fiber of 50 wt%, a polyamide 66 (PA 66) of 37 wt% and a glass fiber of 63 wt% as a material of DuPont after moisture absorption were measured.

Properties Evaluation

The prepared pellets of the above examples were injection-molded to produce specimens for an outside mirror frame. Properties of the specimens were evaluated in the following manner in comparison with the products of the comparative examples, and the results are shown in Table 11 below.

1. Evaluation of Izod impact strength: Performed according to ASTM D256.

2. Evaluation of Product moisture absorption rate: Moisture content was measured after 500 hours of treatment at a temperature of 50°C and a relative humidity of 90%.

3. Evaluation of water resistance (properties maintenance rate): Water content was measured after 500 hours of treatment at a temperature of 50°C and a relative humidity of 90%.

4. Flexural modulus evaluation: Flexural strength was evaluated in accordance with ASTM D790.

5. Tensile strength: Performed according to ASTM D638.

6. Flexural strength: Performed according to ASTM D790.

The properties of Examples and Comparative Examples were as shown in Table 11 below.

**Table 11**

| Division | Mixing ratio | moisture absorption rate | Tensile strength | Flexural strength | Flexural modulus | impact strength |
|---|---|---|---|---|---|---|
| | | % | MPa | MPa | MPa | $KJ/m^2$ |
| Comparative Example 12 | PA6/GF50 | 4.64 | 39 | 43 | 32 | 30 |
| Comparative Example 13 | PA66/GF63 | 3.09 | 36 | 46 | 33 | 25 |
| Example 35 | PK/GF40 | 1.65 | 90 | 85 | 82 | 20 |
| Example 36 | PK/GF50 | 1.41 | 77 | 88 | 88 | 20 |
| Example 37 | PK/GF60 | 1.25 | 73 | 87 | 87 | 20 |

As shown in Table 11, the moisture absorptivity of the product was low, and it was evaluated to be very excellent in that the properties maintenance rate after moisture absorption was high. Accordingly, the outside mirror frame manufactured through the example of the present invention is very suitable for application as an outside mirror frame having excellent impact resistance, water resistance and low moisture absorption rate.

Example 38

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). The molar ratio of ethylene to propene in the polyketone terpolymer prepared above was 46 : 4. The melting point of the polyketone terpolymer was 220°C, the LVN measured at 25°C by HFIP (hexa-fluoroisopropano) was 1.4 dl/g and the Melt index was 48 g / 10 min. 90 wt% of the polyketone terpolymer prepared above and 10 wt% of ABS were molded into pellets on an extruder using a twin screw having a diameter of 2.5 cm and L/D = 32, which was operated at 250 rpm, and then injection molded to produce a specimen for automobile external wheel cover. Their properties were evaluated in the following manner in comparison with the product of Comparative Example 14, and the results are shown in Table 12 below.

Example 39

The same as Example 38 except that 80 wt% of polyketone terpolymer and 20 wt% of ABS were used.

Comparative Example 14

The specimens for automobile external wheel cover were prepared by injection molding of pellets using Polyamide 66 (PA 66) as the material of DuPont, and then physical properties were evaluated. The results are shown in Table 12 below.

Properties Evaluation

The pellets prepared in Examples 38 and 39 were injection molded to prepare specimens for automobile external wheel covers. The properties of the specimens were evaluated in the following manner in comparison with the products of Comparative Example 14, and the results are shown in Table 12 below.

1. Evaluation of moisture absorption rate: Measurement of moisture absorption rate at 50°C and 90% RH

2. Evaluation of properties maintenance rate of calcium chloride resistance:

    (1) immersing the prepared specimen in water at 100°C for 2 hours;

    (2) cooling the immersed specimen at room temperature (RT) for 30 minutes;

    (3) immersing the cooled specimen in a 35% calcium chloride solution at 100°C for 2 hours;

    (4) cooling the immersed specimen at room temperature (RT) for 60 minutes;
    After repeating the above steps (1) to (4) 20 times, tensile strength maintenance rate is measured.

3. Impact strength evaluation: Performed according to ASTM D256

**Table 12**

| Item | Unit | PK(90):ABS (10) | PK(80):ABS (20) | NY66 High impact |
|---|---|---|---|---|
| Charpy Impact Strength(Room Temperature) | $kJ/m^2$ | 70 (Hinge break) | 80 (Hinge break) | 30 |
| Charpy Impact Strength (-30°C) | $kJ/m^2$ | 9.5 | 13.8 | 5 |
| tensile strength | MPa | 50 | 48 | 50 |

(continued)

| Item | Unit | PK(90):ABS (10) | PK(80):ABS (20) | NY66 High impact |
|---|---|---|---|---|
| Tensile elongation | % | 71 | 137 | 40 |
| Flexural strength | MPa | 52 | 48 | 80 |
| Flexural modulus | MPa | 1,400 | 1200 | 2000 |
| Product Moisture absorption rate (%, 50°C/90% RH) | % | 1.1 | 1.2 | 3.5 |
| product calcium chloride resistance (%, properties maintenance rate) | % | 95 | 90 | 70 |

As can be seen from Table 12, Example 38 showed lower water absorptivity than Comparative Example 14, so that it had better water resistance and better resistance to calcium chloride, and thus was superior in chemical resistance. Example 38 was superior to Comparative Example 14. Thus, Example 38 was found to be better for use as an automobile external wheel cover.

Example 40

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). The molar ratio of ethylene to propene in the polyketone terpolymer prepared above was 46 : 4. The melting point of the polyketone terpolymer was 220°C, the LVN measured at 25°C by HFIP (hexa-fluoroisopropano) was 1.4 dl/g and the Melt index was 60 g / 10 min. 80 wt% of the polyketone terpolymer prepared above and 20 wt% of ABS were molded into pellets on an extruder using a twin screw having a diameter of 4 cm and L/D = 32, which was operated at 250 rpm, and then injection molded to produce a specimen for automobile wheel accessary.

Example 41

A specimen for an automobile wheel accessary was prepared in the same manner as in Example 40 except that 75 wt% of polyketone terpolymer and 25 wt% of ABS were used.

Example 42

The same as Example 40 except that the intrinsic viscosity of the polyketone terpolymer was adjusted to 1.1 dl/g.

Example 43

The same as Example 40 except that the intrinsic viscosity of the polyketone terpolymer was adjusted to 2.0 dl/g.

Comparative Example 15

As a material of DuPont, Polyamide 66 (PA 66) was used as the material of the pellet, and injection molding was carried out to prepare specimens for automobile automobile wheel accessary.

Properties Evaluation

The specimens for automobile automobile wheel accessary prepared in Examples 40 and 41 were compared with those of Comparative Example 15 to evaluate physical properties as follows. The results are shown in Table 13 below.

1. Evaluation of moisture absorption rate: Measurement of moisture absorption rate at 50°C and 90% RH

2. Evaluation of properties maintenance rate of calcium chloride resistance:

    (1) placing the prepared specimen on water at 100°C for 2 hours;

(2) cooling the immersed specimen at room temperature (RT) for 30 minutes;

(3) immersing the cooled specimen in a 35% calcium chloride solution at 100°C for 2 hours;

(4) cooling the immersed specimen at room temperature (RT) for 60 minutes;
After the above steps (1) to (4) are repeated 20 times, the properties maintenance rate of the impact strength is measured.

3. Impact strength evaluation: Performed according to ASTM D256

4. Oil resistance: Oil absorption measurement after gasoline immersion of 50°C for 48 hours and 96 hours

Table 13

| Item | Unit | Example 40 PK(80):ABS (20) | Example 41 PK(75):ABS (25) | Example 42 PK(80):ABS (20) | Example 43 PK(80):ABS (20) | Comparative Example 15 PA66 |
|---|---|---|---|---|---|---|
| Charpy Impact Strength (Room Temperature) | $kJ/m^2$ | 32 | 38 | 30 | 35 | 6 |
| Charpy Impact Strength (-30°C) | $kJ/m^2$ | 8.8 | 11.8 | 7.8 | 9.2 | 4 |
| Product moisture absorption rate (%, 50°C/90% RH) | % | 0.9 | 1.0 | 0.9 | 0.9 | 3.5 |
| Product calcium chloride resistance (%, properties maintenance rate) | % | 95 | 90 | 95 | 95 | 65 |
| Oil absorption (after 48 hours) | % | 0.10 | 0.13 | 0.10 | 0.10 | 0.16 |
| Oil absorption (after 96 hours) | % | 0.13 | 0.17 | 0.13 | 0.13 | 0.20 |

As can be seen from the above Table 13, the examples showed lower water absorptivity of the product than Comparative Example 15, showing better water resistance, better resistance to calcium chloride and better chemical resistance, was superior to Comparative Example 15. Therefore, the example is more excellent for use as an automobile wheel accessary.

Example 44

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g and the Melt index was 48 g / 10 min. 56.7 wt% of the polyketone terpolymer prepared above, 33 wt% of glass fiber, 10 wt% of Nylon 61 and 0,3 wt% of silane additive were molded into pellets on an extruder using a twin screw having a diameter of 2.5 cm and L/D = 32, which was operated at 250 rpm.

Comparative Example 16

A specimen was prepared for the mixed polyimide resin composition obtained by mixing 33 wt% of glass fiber with 100 wt% of a polyimide resin mixed with 70 wt% of polyimide 66 (PA 66) and 30 wt% of polyimide 612 (PA 612)

Properties Evaluation

The prepared pellets of the above Examples were injection molded to prepare test specimens for automobile radiator end tanks. The test specimens were evaluated in the following manner in comparison with the specimens of the comparative examples. The results are shown in Table 14 below.

1. Evaluation of strain rate of product: Evaluated according to MS211-47 for vertical and horizontal directions at a temperature of 50°C and a relative humidity of 90%.

2. Evaluation of weight change rate of product: Evaluation was made according to MS211-47 under conditions of a temperature of 50°C and a relative humidity of 90%.

3. Water resistance properties maintenance rate: The impact strength was measured after treatment for 24 hours at a temperature of 50°C and a relative humidity of 90%

4. Antifreeze resistance evaluation: Evaluation at 146°C for 144 hours

5. Evaluation of oil resistance: Antifreeze and Mission Oil were mixed and evaluated at 120°C for 144 hours

6. Evaluation of heat aging resistance test: Evaluation of calcium chloride aqueous solution at 120°C for 144 hours

**Table 14**

| Item | Example 44 | Comparative Example 16 |
|---|---|---|
| Evaluation of strain rate of product (Vertical, 50°C, relative humidity 90%) | 0.05% | 0.30% |
| Evaluation of strain rate of product (horizontal, 50°C, relative humidity 90%) | 0.02% | 0.25% |
| weight change rate of product (50°C, relative humidity 90%) | 0.95% | 6.50% |
| Water resistance properties maintenance rate (50°C, relative humidity 90%) | 90% | 50% |
| Antifreeze resistance | 71% | 38% |
| oil resistance | 86% | 59% |
| heat aging resistance | 85% | 61% |

As shown in Table 14, the strain rate of the product in the vertical and horizontal directions was lower than that of the comparative example, and the weight change rate of product was also lower than that of the comparative example. It was evaluated as excellent.

Particularly, the specimen of the polyketone resin composition was evaluated as ME / ES SPEC (MS211-47) under the conditions of a fuel temperature of 50°C and a relative humidity of 90%, and the maintenance rate such as antifreeze resistance, oil resistance, heat aging resistance and the like was 80% or more, which is excellent.

In addition, the product weight change rate evaluated by ME / ES SPEC (MS211-47) under the condition of temperature 50 °C and relative humidity 90% was 5.0% or less, which is superior.

Accordingly, the automobile radiator end tank manufactured through the example of the present invention has been found to be very suitable for use as an automobile radiator end tank because the it is excellent in water resistance, dimensional stability, and chemical resistance.

Example 45

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, as a mixed solvent, 5 parts by weight of water relative to 100 parts by weight of methanol and the two stages of the first stage at a polymerization temperature of 78°C and the second stage at 84°C are carried out. The molar ratio of ethylene to propene in the polyketone terpolymer prepared above was 85 : 15. The

melting point of the polyketone terpolymer was 220°C, the LVN measured at 25°C by HFIP (hexa-fluoroisopropanol) was 1.4 dl/g, the Melt index was 48 g / 10 min and the residual amount of palladium was 10 ppm.

A composition prepared by mixing 80 wt% of the polyketone terpolymer prepared above and 20 wt% of glass fiber was molded into pellets on an extruder using a twin screw having a diameter of 2.5 cm and L/D = 32, which was operated at 250 rpm, and then injection molded to produce a specimen for pressure cooker clean cover.

Example 46

The same as Example 45 except that 75 wt% of the polyketone terpolymer and 25 wt% of the glass fiber.

Comparative Example 17

35 wt% of PPS and 65 wt% of glass fiber were added as a material of DuPont to prepare a composition. The composition thus prepared was placed in a twin-screw (diameter: 2.5 cm, L/D = 32 to prepare pellets on an extruder, followed by injection molding to prepare a pressure cooker clean cover specimen.

Comparative Example 18

90 wt% of PC and 10 wt% of glass fiber were added as a material of DuPont to prepare a composition. The composition thus prepared was placed in a twin-screw (diameter: 2.5 cm, L/D = 32 to prepare pellets on an extruder, followed by injection molding to prepare a pressure cooker clean cover specimen.

Properties Evaluation

The pellets prepared in each of Examples 45 and 46 and Comparative Examples 17 and 18 were injection molded to prepare polyketone pressure cooker clean cover specimens. The properties were evaluated in the following manner, and the results are shown in Tables 15 and 16, respectively.

1. Evaluation of Izod impact strength: Performed according to ASTM D256.

2. Evaluation of product moisture absorption rate: Moisture content after 24 hours treatment at 50°C and 90% relative humidity was measured

3. Water resistance properties maintenance rate: The impact strength was measured after treatment for 24 hours at a temperature of 50°C and a relative humidity of 90%

4. Evaluation of Product strain rate (Dimension Evaluation): Evaluation was made according to MS211-47 for vertical and horizontal directions at a temperature of 50°C and a relative humidity of 90%

5. Free fall evaluation: A clean cover manufactured in a real pressure rice cooker was mounted, and the water cooking (water only and cooked) was repeated 250 times, and then the clean cover was freely dropped at 1 m to check cracks, breakage and deformation

6. Evaluation of oil immersion: The clean cover was immersed in 120°C oil for 24 hours and then dropped freely at 1 m to confirm cracks, breakage, and deformation

Physical properties of Examples and Comparative Examples were as shown in Tables 15 and 16 below.

**Table 15**

| Item | Example 45 | Example 46 | Example 17 | Example 18 |
|---|---|---|---|---|
| product moisture absorption rate (%, 50°C, 90%RH) | 1.0 | 1.2 | 2.5 | 3.0 |
| product water resistance (%, properties maintenance rate) | 85 | 83 | 78 | 77 |
| Impact strength (kJ/$m^2$) | 25 | 28 | 20 | 8 |

(continued)

| Item | Example 45 | Example 46 | Example 17 | Example 18 |
|---|---|---|---|---|
| Evaluation of Product strain rate (vertical, 50°C, relative humidity 90%) | 0.1 | 0.11 | 0.2 | 0.3 |
| Evaluation of Product strain rate (horizontal, 50°C, relative humidity 90%) | 0.09 | 0.1 | 0.3 | 0.4 |

**Table 16**

| Division | Evaluation items | Free fall evaluation after 250 times of water cooking | Free fall evaluation after immersion in 120°C oil for 24 hours |
|---|---|---|---|
| Comparative Example 17 | PPS/ GFMF65% | destruction | Destruction |
| Comparative Example 18 | PC/GF10% | destruction | Destruction |
| Example 45 | PK/GF20% | Non -destruction | Non-destruction |
| Example 46 | PK/GF25% | Non -destruction | Non-destruction |

As shown in Tables 15 and 16, the impact strength of the examples was improved and the dimensional stability was evaluated to be excellent because the strain rate was low in evaluation of the product strain rate in the vertical direction and the horizontal direction. Also, it was nondestructive when evaluating free fall after oil immersion, and it was non-destructed when free fall evaluation was performed after 250 times of water immersion, so both water resistance and oil resistance were evaluated to be excellent. Therefore, the polyketone pressure cooker clean cover manufactured through the example of the present invention is excellent in water resistance, oil resistance, impact resistance and dimensional stability, and thus is suitable for application as a pressure cooker clean cover.

Example 47

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min and the MWD was 2.2. The polyketone terpolymer prepared above was molded into pellets on an extruder using a twin screw having a diameter of 40 mm and L/D = 32, which was operated at 250 rpm, and then injection molded to produce a specimen for green juicer screws.

Example 48

The same as Example 47 except that the intrinsic viscosity of the polyketone was adjusted to 2.0.

Example 49

The same as Example 47 except that the MWD was adjusted to 1.8.

Example 50

The same as Example 47 except that the MWD was adjusted to 2.2.

Comparative Example 19

The same as Example 47 except that PEI was used as a material of DuPont Co. instead of polyketone.

Properties Evaluation

The prepared pellets of the above Examples were injection-molded to prepare test specimens for the green juicer screws, and the properties were evaluated by the following methods in comparison with the products of the comparative examples, and the results are shown in Table 17 below.

1. Evaluation of Izod impact strength: Performed according to ASTM D256.
2. Tensile strength evaluation: Performed according to ASTM D638.
3. Flexural strength: Performed according to ASTM D790.
4. Ring-on-Ring Type (Resin): A through-type specimen having an outer diameter of 25.6 mm, an inner diameter of 20 mm and a height of 15 mm was injection-molded and fixed to a testing machine. The test is carried out under the driving conditions of a press load of 6.6 kgf and a speed of 10 cm/s. At this time, non-abrasion amount was calculated using the following formula to evaluate abrasion resistance. The smaller the amount of non-abrasion obtained, the better the abrasion resistance.

$$\text{non-abrasion amount} = \text{abrasion weight (mg)} / [\text{Density (mg / mm3) X Pressure load (kgf) X Travel distance (km)}]$$

* Test equipment: Trust type (Friction type abrasion tester)

5. Evaluation of acid resistance: The tensile strength maintenance rate of the specimen immediately after injection molding and the tensile strength after immersion for 10 days in acetic acid 3% solution were measured according to ASTM D638.

Physical properties of the examples and comparative examples were as shown in Table 17 below.

**Table 17**

| Division | Tensile strength | Flexural strength | Impact strength | abrasion amount | acid resistance (tensile strength maintenance rate) |
|---|---|---|---|---|---|
| | MPa | MPa | $KJ/m^2$ | $mm^3/kg/km$ | % |
| Comparative Example 19 | 39 | 43 | 30 | 10.2 | 70% |
| Example 47 | 77 | 88 | 52 | 0.61 | 82 |
| Example 48 | 90 | 85 | 50 | 0.65 | 85 |
| Example 49 | 80 | 87 | 59 | 0.60 | 83 |
| Example 50 | 79 | 85 | 55 | 0.63 | 81 |

As shown in Table 17, the examples made of polyketone have excellent abrasion resistance with an abrasion amount of less than 1 $mm^3/kg/km$ and excellent impact resistance with an impact strength of 50 $kJ/m^2$ or more, the tensile strength maintenance rate was measured to be 80% or more at a slightly acidic condition (3% acetic acid solution, 10 days immersion). Therefore, the green juicer screws manufactured through the example of the present invention has excellent impact resistance, abrasion resistance, and acid resistance, and thus is well suited for application as a green juicer screws.

Example 51

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 2.0 and the residual amount

of palladium was 3 ppm. The polyketone terpolymer prepared above was molded into pellets on an extruder using a twin screw having a diameter of 40 mm and L/D = 32, which was operated at 250 rpm, and then injection molded to produce a specimen for gasket for accumulator.

Example 52

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min, the MWD was 2.0 and the residual amount of palladium was 4 ppm. The polyketone terpolymer prepared above was molded into pellets on an extruder using a twin screw having a diameter of 40 mm and L/D = 32, which was operated at 250 rpm, and then injection molded to produce a specimen for gasket for accumulator.

Example 53

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 72°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 2.0 dl/g, the MI index was 60 g / 10 min, the MWD was 2.0 and the residual amount of palladium was 5 ppm. The polyketone terpolymer prepared above was molded into pellets on an extruder using a twin screw having a diameter of 40 mm and L/D = 32, which was operated at 250 rpm, and then injection molded to produce a specimen for gasket for accumulator.

Comparative Example 20

Nylon 66 resin was molded into pellets on an extruder using a twin screw having a diameter of 40 mm and L/D = 32, which was operated at 250 rpm, and then injection molded to produce a specimen for gasket for accumulator.

Properties Evaluation

The properties of the specimens prepared in Examples 51 to 53 and Comparative Example 20 were evaluated in the following manner. The results are shown in Table 18 below.

1. Evaluation of moisture absorption rate: The water content was measured after treatment for 10 days at a temperature of 50°C and a relative humidity of 90% RH.
2. Water Resistance Properties maintenance rate: The specimens were treated at 85°C and 85% RH at 24, and the width of the parallel parts of the gasket specimens before and after treatment was measured by a slide caliper.

**Table 18**

| Item | Example 51 | Example 52 | Example 53 | Comparative Example 20 |
|---|---|---|---|---|
| Moisture absorption rate (%) | 0.97 | 0.99 | 0.98 | 1.78 |
| Dimensional change rate (%) | 0.29 | 0.27 | 0.26 | 0.31 |

As can be seen from Table 18, the water absorption rate (less than 1.0%) and the dimensional change rate (less than 0.3%) were lower in the examples than the comparative examples.

Therefore, the gasket according to the present invention is excellent in water resistance and dimensional stability, and thus is very suitable for application to a accumulator.

Example 54

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. In the polyketone terpolymer prepared above, carbon monoxide was 50 mol%, ethylene was 46 mol%, and propylene was 4 mol%. The melting point of the polyketone terpolymer was 220°C, the LVN measured at 25°C by HFIP (hexa-fluoroisopropanol) was 1.4 dl/g, the MI index was 60 g / 10 min, the MWD was 2.0 and the residual amount of palladium was 5 ppm.

A composition prepared by mixing 61 wt% of the polyketone terpolymer prepared above, 26 wt% of Nylon 6 and 13 wt% of rubber (Ethyl Octane Rubber) was molded into pellets on an extruder using a twin screw having a diameter of 40 mm and L/D = 32, which was operated at 250 rpm, and then injection molded to produce a specimen for gasket for alkaline batteries.

Example 55

A composition prepared by mixing 65 wt% of the polyketone terpolymer prepared same as Example 1, 23 wt% of Nylon 6 and 12 wt% of rubber (Ethyl Octane Rubber) was molded into pellets on an extruder using a twin screw having a diameter of 40 mm and L/D = 32, which was operated at 250 rpm, and then injection molded to produce a specimen for gasket for alkaline batteries.

Example 56

A composition prepared by mixing 70 wt% of the polyketone terpolymer prepared same as Example 1, 20 wt% of Nylon 6 and 10 wt% of rubber (Ethyl Octane Rubber) was molded into pellets on an extruder using a twin screw having a diameter of 40 mm and L/D = 32, which was operated at 250 rpm, and then injection molded to produce a specimen for gasket for alkaline batteries.

Comparative Example 21

A composition prepared by mixing 30 wt% of the high impact nylon 66 resin and rubber was molded into pellets on an extruder using a twin screw having a diameter of 40 mm and L/D = 32, which was operated at 250 rpm, and then injection molded to produce a specimen for gasket for alkaline batteries.

Properties Evaluation

The properties of the specimens prepared in Examples 54 to 56 and Comparative Example 21 were evaluated in the following manner. The results are shown in Table 19 below.

1. Evaluation of moisture absorption: The sample was treated at 30°C for 7 days, and the water content was measured.

**Table 19**

| Item | Example 54 | Example 55 | Example 56 | Comparative Example 21 |
|---|---|---|---|---|
| Moisture absorption (%) | 3.8 | 3.9 | 3.7 | 7.4 |

As can be seen from the above Table 19, in the case of Examples, the water absorption rate was low (less than 4%), so the water resistance was superior to the Comparative Example.

Therefore, the gasket according to the present invention is excellent in water resistance, and thus is very suitable for application to alkaline batteries.

Example 57

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-

5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.2 dl/g, the MI index was 60 g / 10 min, the MWD was 2.0.

The prepared polyketone terpolymer was injection molded using a mold of tooth form at a pressure of 70 to 80 bar, a temperature of 230 to 260 °C and a mold temperature of 150 °C to produce a gear.

Example 58

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 2.0.

The prepared polyketone terpolymer was injection molded using a mold of tooth form at a pressure of 70 to 80 bar, a temperature of 230 to 260 °C and a mold temperature of 150 °C to produce a gear.

Example 59

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.6 dl/g, the MI index was 60 g / 10 min, the MWD was 2.0.

The prepared polyketone terpolymer was injection molded using a mold of tooth form at a pressure of 70 to 80 bar, a temperature of 230 to 260 °C and a mold temperature of 150 °C to produce a gear.

Example 60

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 1.8.

The prepared polyketone terpolymer was injection molded using a mold of tooth form at a pressure of 70 to 80 bar, a temperature of 230 to 260 °C and a mold temperature of 150 °C to produce a gear.

Example 61

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 46 : 4. The melting point of the polyketone terpolymer was 220°C, the LVN measured at 25°C by HFIP (hexa-fluoroisopropanol) was 1.4 dl/g, the MI index was 60 g / 10 min, the MWD was 2.2.

The prepared polyketone terpolymer was injection molded using a mold of tooth form at a pressure of 70 to 80 bar, a temperature of 230 to 260 °C and a mold temperature of 150 °C to produce a gear.

Comparative Example 22

A polyoxymethylene resin was used in place of the polyketone copolymer in the same manner as in Example 57.

Properties Evaluation

1. Evaluation of dimensional stability, tensile strength and abrasion resistance: The polyketone copolymers prepared in the above Examples and Comparative Examples were put into a twin screw extruder of L/D32 and D 40 without injection molding, and extruded through melt kneading at a screw rotation speed of 250 rpm to prepare specimens. The prepared specimens were evaluated for dimensional stability, tensile strength and abrasion resistance by the following methods.

1) Dimensional stability evaluation: The strain rate of the product was evaluated according to MS211-47 for vertical and horizontal directions at a temperature of 50°C and a relative humidity of 90%.

2) Tensile strength evaluation: The tensile strength was measured based on JIS C 2318 using an evaluation sample having a length of 200 mm and a width of 15 mm. The strength and elongation at break were measured and the mean value at n = 5 was determined.

3) Evaluation of abrasion resistance: The weight loss was calculated at 25°C by using the thrust washer testing apparatus shown in Fig. 1 for a gear having a tooth shape manufactured by the injection molding method of the above example and comparative example, and the wear factor ($K_{LNP}$) was calculated by the following equation.

$$K_{LNP}=W/PVT$$

(V = speed (ft./min.), P = pressure (lbs./in2), T = elapsed time (hrs) and W is the weight loss divided by the density)

2. Noise evaluation: A tooth-shaped gear manufactured by the injection molding method of the above examples and comparative examples was attached to a robot cleaner, and the average sound power level on the carpeted floor was measured by measuring the noise for 30 seconds through an anechoic chamber measurement according to standard of (KS C IEC 60704-2-1)

**Table 20**

| Item | Example 57 | Example 58 | Example 59 | Example 60 | Example 61 | Comparative Example 22 |
|---|---|---|---|---|---|---|
| Product strain rate - vertical (50°C, RH 90%) | 0.05 | 0.05 | 0.04 | 0.05 | 0.05 | 0.15 |
| Product strain rate - horizontal (50°C, RH 90%) | 0.02 | 0.02 | 0.02 | 0.02 | 0.02 | 0.08 |
| Tensile strength (MPa) | 85 | 82 | 80 | 78 | 82 | 44 |
| Wear factor $K_{LNP}$ | 136 | 140 | 133 | 141 | 148 | 280 |
| noise (sound power level dBA) | 82.1 | 83.1 | 80.4 | 83.1 | 85.5 | 110.4 |

The polyketone copolymer according to the present invention exhibits excellent moisture resistance due to less deformation of the product due to moisture absorption, great mechanical properties such as tensile strength and abrasion resistance, as well as low noise, so it very suitable to be used as a gear of a robot cleaner.

The gear of the present invention is excellent at less than 90 dB when the noise is measured for 30 seconds

by the semi-anechoic chamber measurement according to the standard of KS C IEC 60704-2-1.

Example 62

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 11 times the molar ratio, and the two stages of the first stage at a polymerization temperature of 80°C and the second stage at 84°C are carried out. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 1.4 dl/g, the MWD was 2.0.
The polyketone terpolymer prepared above were molded into pellets on an extruder using a twin screw having a diameter of 2.5 cm and L/D = 32, which was operated at 250 rpm, and then injection molded on a molding machine having a mold clamping force of 80 tons to produce a specimen for partition frame.

Example 63

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 1.6 dl/g, the MWD was 2.0.
The polyketone terpolymer prepared above were molded into pellets on an extruder using a twin screw having a diameter of 2.5 cm and L/D = 32, which was operated at 250 rpm, and then injection molded on a molding machine having a mold clamping force of 80 tons to produce a specimen for partition frame.

Example 64

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 9 times the molar ratio, and the two stages of the first stage at a polymerization temperature of 74°C and the second stage at 84°C are carried out. The molar ratio of ethylene to propene in the polyketone terpolymer prepared above was 85 : 15. The melting point of the polyketone terpolymer was 220°C, the LVN measured at 25°C by HFIP (hexa-fluoroisopropanol) was 2.0 dl/g, the MWD was 2.0.
The polyketone terpolymer prepared above were molded into pellets on an extruder using a twin screw having a diameter of 2.5 cm and L/D = 32, which was operated at 250 rpm, and then injection molded on a molding machine having a mold clamping force of 80 tons to produce a specimen for partition frame.

Comparative Example 23

The impact resistance, dimensional stability and water resistance of PA 6, which was used as a partition frame in the past, were measured.

Properties Evaluation

1. Evaluation of impact resistance, dimensional stability and water resistance: The impact resistance, dimensional stability and water resistance of the partition frame prepared in the above Examples and Comparative Examples were evaluated by the following methods. The results are shown in Table 21 below.

   1) Evaluation of Izod impact strength: Performed according to ASTM D256.

   2) Evaluation of dimensional stability: The strain of the product was evaluated according to MS211-47 for vertical and horizontal directions at a temperature of 50°C and a relative humidity of 90%.

3) Evaluation of water resistance properties maintenance rate: The specimens were treated under standard conditions (25 °C, 65% RH relative humidity, 24 hours) and high temperature and high humidity conditions (50 °C, 90% RH, 24 hours), according to ASTM D256 , and the average value of the measured values for 5 times each in vertical and horizontal directions was taken for each treated sample.

**Table 21**

| Item | Example 62 | Example 63 | Example 64 | Comparative Example 23 |
|---|---|---|---|---|
| Impact strength (kJ/m$^2$) | 23 | 22 | 25 | 9 |
| Product strain rate-vertical (50°C, RH 90%) | 0.12 | 0.14 | 0.10 | 0.25 |
| Product strain rate-horizontal (50°C, RH 90%) | 0.04 | 0.03 | 0.10 | 0.25 |
| Product water resistance (%, properties maintenance rate) | 85 | 87 | 90 | 45 |

As can be seen from Table 21, the examples showed excellent dimensional stability, water resistance and impact resistance as compared with the comparative examples. Therefore, the office polyketone partition frame manufactured through the example of the present invention exhibits better dimensional stability, water resistance and impact resistance than the comparative example used as a conventional office partition frame material, and thus is more suitable for application as an office partition frame.

Example 65

Linear alternating polyketone terpolymers of carbon monoxide and ethylene and propene are prepared in the presence of a catalyst composition formed from palladium acetate, trifluoroacetic acid and ((2,2-dimethyl-1,3-dioxane-5,5-diyl) bis (methylene) bis (2-methoxyphenyl) phosphine). In the above, the content of trifluoroacetic acid with respect to palladium is 10 times the molar ratio, and the two stages of the first stage at a polymerization temperature of 78°C and the second stage at 84°C are carried out. In the polyketone terpolymer prepared above, carbon monoxide was 50 mol%, ethylene was 46 mol%, and propylene was 4 mol%. The melting point of the polyketone terpolymer was 220°C, the LVN measured at 25°C by HFIP (hexa-fluoroisopropanol) was 1.4 dl/g, the MWD was 2.0.

A composition prepared by mixing 70 wt% of the polyketone terpolymer prepared above and 30 wt% of glass fiber were molded into pellets on an extruder using a twin screw having a diameter of 40 cm and L/D = 32, which was operated at 250 rpm, and then injection molded to produce a specimen for box frame.

Example 66

A composition prepared by mixing 75 wt% of the polyketone terpolymer prepared same as Example 65 and 25 wt% of glass fiber were molded into pellets on an extruder using a twin screw having a diameter of 40 cm and L/D = 32, which was operated at 250 rpm, and then injection molded to produce a specimen for box frame.

Example 67

A composition prepared by mixing 80 wt% of the polyketone terpolymer prepared same as Example 65 and 20 wt% of glass fiber were molded into pellets on an extruder using a twin screw having a diameter of 40 cm and L/D = 32, which was operated at 250 rpm, and then injection molded to produce a specimen for box frame.

Comparative Example 24

A composition prepared by mixing 70 wt% of the Nylon 6 resin and 30 wt% of glass fiber were molded into pellets on an extruder using a twin screw having a diameter of 40 cm and L/D = 32, which was operated at 250 rpm, and then injection molded to produce a specimen for box frame.

Properties Evaluation

The specimens prepared in Examples 65 to 67 and Comparative Example 24 were evaluated for physical

properties in the following manner. The results are shown in Table 22 below.

1. Evaluation of Flexural Strength: According to ASTM D790, the flexural strength was measured after standing at RH 50% for 7 days.

2. Evaluation of dimensional change rate: After 48 hours of immersion in hot water at a temperature of 50 °C, the width of a parallel portion of the specimen before and after treatment was measured by a slide caliper to observe the dimensional change.

3. Water resistance: After 48 hours of immersion in hot water at a temperature of 50°C, the Flexural strength maintenance rate was measured according to ASTM D790.

**Table 22**

| Division | Flexural strength (MPa) | Water resistance (%) | dimensional change rate (%) |
|---|---|---|---|
| Example 65 | 220 | 90 | 0.8 |
| Example 66 | 240 | 88 | 0.7 |
| Example 67 | 250 | 89 | 0.6 |
| Comparative Example 24 | 210 | 53 | 2.3 |

As can be seen from Table 22, the examples showed excellent dimensional stability, flexural strength and water resistance as compared with the comparative examples. Therefore, the box frame manufactured through the example of the present invention shows better dimensional stability, flexural strength and water resistance than the comparative example used as the conventional box frame material, and thus is more suitable for application as a box frame.

## Claims

1. A polyketone copolymer having outstanding water resistance, moisture-absorption rate and shock resistance comprising repeating units represented by the following general formulas (1), (2) of which the intrinsic viscosity is from 1.0 to 2.0 dl/g and molecular weight distribution is from 1.5 to 2.5

$$-[-CH_2CH_2-CO]x- \qquad (1)$$

$$-[-CH_2-CH(CH_3)-CO]y- \qquad (2)$$

wherein x,y represents the mole % of each of general formulas (1) and (2) in the copolymer, and y/x of the general formulas (1) and (2) is from 0.03 to 0.3, and
wherein a ligand of catalyst composition used in polymerization of the polyketone copolymer is ((2,2-dimethyl-1,3-dioxane-5,5-diyl)bis(methylene))bis(bis(2-methoxyphenyl)phosphine).

2. The polyketone copolymer according to claim 1, **characterized in that** the remaining amount of palladium catalyst of the polyketone copolymer is not more than 50 ppm.

3. A component selected from the group consisting of tube fixing clip or tube fixing holder for attaching to car body and connector produced by the polyketone copolymer according to any one of claims 1 or 2.

4. A component selected from the group consisting of green juicer screw, gasket for accumulator, gear for robot cleaner and partition frame produced by the polyketone copolymer according to any one of claims 1 or 2.

5. The component according to claim 3, **characterized in that** the component is a polyketone connector having a wear amount of not more than 1.00 $mm^3/kg/km$, and a decline rate of flexural modulus of not more than 30% in forced wetting evaluation.

6. A polyketone resin composition **characterized in that** it is produced by injection molding a blend comprising:

a polyketone copolymer of carbon monoxide and at least one olefin, of which the intrinsic viscosity is from 1.0 to 2.0 dl/g and molecular weight distribution is from 1.5 to 2.5; and
one or two more additive material(s) selected from the group consisting of glass fibers, para-aramid, a flame retardant, rubber, a mineral filler, acrylonitrile butadiene styrene (ABS), Nylon 61 and silane additives,
and wherein a ligand of catalyst composition used in polymerization of the polyketone copolymer is ((2,2-dimethyl-1,3-dioxane-5,5-diyl)bis(methylene))bis(bis(2-methoxyphenyl)-phosphine).

**7.** The polyketone resin composition according to claim 6, **characterized in that** the flame retardant is one selected from the group consisting of the halogen-based flame retardant, phosphorus-based flame retardant, hydrated metal compound, a silicon compound, a silicate, the alkali metal salt and the melamine-based flame retardant.

**8.** The polyketone resin composition according to claim 6, **characterized in that** the rubber is ethylene propylene diene monomer rubber.

**9.** The polyketone resin composition according to claim 6, **characterized in that** the mineral filler comprises one filler selected from the group consisting of talc, kaolin, mica, wollastonite, $TiO_2$-coated mica platelets, silica, alumina, and borosilicate.

**10.** A component selected from the group consisting of molding product for automobile fuel container, automobile fuel inlet, outside mirror frame, automobile exterior wheel cover, automobile wheel accessory and automobile radiator end tank produced by the polyketone resin composition according to any one of claims 6 to 9.

**11.** A component selected from the group consisting of polyketone bolt, industrial switch, bobbin, chain for waste water sludge treatment, cable tie, component for drinking water, pressure cooker clean cover, gasket for alkaline battery and box frame produced by the polyketone resin composition according to any one of claims 6 to 9.

**12.** The component according to any one of claims 10 to 11, **characterized in that** properties maintenance rate is not less than 80% in condition of temperature 50°C and relative humidity 90% after treatment for 24 hours, and the moisture-absorption rate is not more than 1.5%.

## Patentansprüche

**1.** Ein Polyketon-Copolymer mit hervorragender Wasserbeständigkeit, Feuchtigkeitsabsorptionsrate und Stoßfestigkeit, welches Wiederholungseinheiten umfasst, die durch die folgenden allgemeinen Formeln (1), (2) repräsentiert werden, und dessen intrinsische Viskosität 1,0 bis 2,0 dl/g beträgt und dessen Molekulargewichtsverteilung 1,5 bis 2,5 ist

$$-[-CH_2CH_2-CO]x- \qquad (1)$$

$$-[-CH_2-CH(CH_3)-CO]y- \qquad (2),$$

wobei x,y die Mol-% einer jeden der allgemeinen Formeln (1) und (2) in dem Copolymer repräsentieren, und y/x der allgemeinen Formeln (1) und (2) 0,03 bis 0,3 ist, und
wobei ein Ligand der Katalysatorzusammensetzung, die zur Polymerisation des Polyketon-Copolymers eingesetzt wurde, ((2,2-Dimethyl-1,3-dioxan-5,5-diyl)bis(methylen))bis(bis(2-methoxyphenyl)phosphin) ist.

**2.** Polyketon-Copolymer nach Anspruch 1, **dadurch gekennzeichnet, dass** die verbleibende Menge an Palladium-Katalysator des Polyketon-Copolymers nicht mehr als 50 ppm beträgt.

**3.** Eine Komponente, welche aus der Gruppe ausgewählt ist, die aus der Gruppe aus einer Rohrbefestigungsklammer oder Rohrbefestigungshalterung zur Verbindung mit einer Autokarosserie und einem Anschlusselement besteht, und mit dem Polyketon-Copolymer nach irgendeinem der Ansprüche 1 oder 2 hergestellt ist.

**4.** Eine Komponente, welche aus der Gruppe ausgewählt ist, die aus einer Entsafterschnecke, Akkumulatordichtung, Ausrüstung für Reinigungsroboter und einem Trennrahmen besteht, und mit dem Polyketon-Copolymer nach irgendeinem der Ansprüche 1 oder 2 hergestellt ist.

5. Komponente nach Anspruch 3, **dadurch gekennzeichnet, dass** es sich bei der Komponente um ein Polyketon-Anschlusselement mit einem Abnutzungsgrad von nicht mehr als 1,00 $mm^3$/kg/km und einer Abnahmerate des Biegemoduls von nicht mehr als 30 % bei einem Zwangsbefeuchtungstest handelt.

6. Eine Polyketon-Harzzusammensetzung, **dadurch gekennzeichnet, dass** sie hergestellt ist durch Spritzgießen einer Mischung, welche umfasst:

   ein Polyketon-Copolymer von Kohlenmonoxid und mindestens einem Olefin, dessen intrinsische Viskosität 1,0 bis 2,0 dl/g beträgt und dessen Molekulargewichtsverteilung 1,5 bis 2,5 ist; und
   ein oder zwei weitere(s) Zusatzmaterial(ien), ausgewählt aus der Gruppe, die aus Glasfasern, para-Aramid, einem Flammschutzmittel, Kautschuk, einem mineralischen Füllstoff, Acrylnitril-Butadien-Styrol (ABS), Nylon 6I and Silan-Additiven besteht,
   und wobei ein Ligand der Katalysatorzusammensetzung, die zur Polymerisation des Polyketon-Copolymers eingesetzt wurde, ((2,2-Dimethyl-1,3-dioxan-5,5-diyl)bis-(methylen))bis(bis(2-methoxyphenyl)phosphin) ist.

7. Polyketon-Harzzusammensetzung nach Anspruch 6, **dadurch gekennzeichnet, dass** das Flammmschutzmittel aus der Gruppe ausgewählt ist, die aus einem halogen-basierten Flammschutzmittel, phosphor-basierten Flammschutzmittel, einer hydratisierten Metallverbindung, einer Siliciumverbindung, einem Silicat, einem Alkalimetallsalz und einem melamin-basierten Flammschutzmittel besteht.

8. Polyketon-Harzzusammensetzung nach Anspruch 6, **dadurch gekennzeichnet, dass** der Kautschuk Ethylen-Propylen-Dienmonomer-Kautschuk ist.

9. Polyketon-Harzzusammensetzung nach Anspruch 6, **dadurch gekennzeichnet, dass** der mineralische Füllstoff einen Füllstoff umfasst, welcher aus der Gruppe bestehend aus Talk, Kaolin, Mica, Wollastonit, $TiO_2$-beschichteten Micaplättchen, Silica, Aluminiumoxid und Borsilicat ausgewählt ist.

10. Eine Komponente, welche aus der Gruppe ausgewählt ist, die aus einem Formteilprodukt für einen Automobil-Kraftstoffbehälter, Automobil-Kraftstoffeinlass, Außenspiegelrahmen, einer Automobil-Außenradabdeckung, Automobil-Radzubehör und einem Automobil-Kühlerendtank besteht, und mit der Polyketon-Harzzusammensetzung nach irgendeinem der Ansprüche 6 bis 9 hergestellt ist.

11. Eine Komponente, welche aus der Gruppe ausgewählt ist, die aus einem Polyketon-Bolzen, industriellem Schalter, einer Spule, Kette für Abwasserschlammbehandlung, einem Kabelbinder, einer Komponente für Trinkwasser, Dampfkocher-Reinigungsabdeckung, Dichtung für eine Alkalibatterie und einem Boxenrahmen besteht, und mit der Polyketon-Harzzusammensetzung nach irgendeinem der Ansprüche 6 bis 9 hergestellt ist.

12. Komponente nach irgendeinem der Ansprüche 10 bis 11, **dadurch gekennzeichnet, dass** die Aufrechterhaltungsrate der Eigenschaften unter Bedingungen von einer Temperatur von 50°C und einer relativen Luftfeuchtigkeit von 90 % nach 24-stündiger Behandlung nicht weniger als 80 % beträgt und die Feuchtigkeitsabsorptionsrate nicht mehr als 1,5 % beträgt.

**Revendications**

1. Copolymère de polycétone présentant une résistance à l'eau, un taux d'absorption d'humidité et une résistance aux chocs exceptionnels comprenant des motifs répétitifs représentés par les formules générales (1), (2) suivantes dont la viscosité intrinsèque est de 1,0 à 2,0 dl/g et la répartition du poids moléculaire est de 1,5 à 2,5

   $-[-CH_2CH_2-CO]X-$ (1)

   $-[-CH_2-CH(CH_3)-CO]y-$ (2)

   dans lesquelles x, y représentent le % molaire de chacune des formules générales (1) et (2) dans le copolymère, et y/x des formules générales (1) et (2) est de 0,03 à 0,3, et
   dans lequel un ligand de composition de catalyseur utilisé dans une polymérisation du copolymère de polycétone est la ((2,2-diméthyl-1,3-dioxane-5,5-diyl)-bis(méthylène))bis(bis(2-méthoxyphényl)phosphine).

**2.** Copolymère de polycétone selon la revendication 1, **caractérisé en ce que** la quantité restante de catalyseur au palladium du copolymère de polycétone n'est pas supérieure à 50 ppm.

**3.** Composant sélectionné dans le groupe consistant en une pince de fixation de tube ou un support de fixation de tube pour une fixation à une carrosserie de voiture et un connecteur produits par le copolymère de polycétone selon l'une quelconque des revendications 1 ou 2.

**4.** Composant sélectionné dans le groupe consistant en une vis d'extracteur de jus, un joint d'étanchéité pour accumulateur, un pignon pour robot nettoyeur et un cadre de séparation produits par le copolymère de polycétone selon l'une quelconque des revendications 1 ou 2.

**5.** Composant selon la revendication 3, **caractérisé en ce que** le composant est un connecteur en polycétone présentant une quantité d'usure de pas plus de 1,00 $mm^3$/kg/km, et un taux de déclin de module de flexion de pas plus de 30 % dans une évaluation de mouillage forcé.

**6.** Composition de résine de polycétone **caractérisée en ce qu'**elle est produite par moulage par injection d'un mélange comprenant :

un copolymère de polycétone de monoxyde de carbone et d'au moins une oléfine, dont la viscosité intrinsèque est de 1,0 à 2,0 dl/g et la répartition du poids moléculaire est de 1,5 à 2,5 ; et
une ou deux matières additives sélectionnées dans le groupe consistant en les fibres de verre, un para-aramide, un ignifuge, un caoutchouc, une charge minérale, un acrylonitrile butadiène styrène (ABS), un nylon 6I et les additifs à base de silane,
et dans laquelle un ligand de composition de catalyseur utilisée dans une polymérisation du copolymère de polycétone est la ((2,2-diméthyl-1,3-dioxane-5,5-diyl)bis(méthylène))bis(bis(2-méthoxyphényl)phosphine) .

**7.** Composition de résine de polycétone selon la revendication 6, **caractérisée en ce que** l'ignifuge est l'un sélectionné dans le groupe consistant en un ignifuge à base d'halogène, un ignifuge à base de phosphore, un composé métallique hydraté, un composé de silicium, un silicate, le sel de métal alcalin et l'ignifuge à base de mélamine.

**8.** Composition de résine de polycétone selon la revendication 6, **caractérisée en ce que** le caoutchouc est un caoutchouc d'éthylène-propylène-monomère diénique.

**9.** Composition de résine de polycétone selon la revendication 6, **caractérisée en ce que** la charge minérale comprend une charge sélectionnée dans le groupe consistant en le talc, le kaolin, le mica, la wollastonite, les plaquettes de mica recouvertes de $TiO_2$, la silice, l'alumine, et le borosilicate.

**10.** Composant sélectionné dans le groupe consistant en un produit de moulage pour récipient de carburant pour automobile, entrée de carburant pour automobile, cadre de miroir extérieur, enjoliveur extérieur de roue d'automobile, accessoire de roue d'automobile et réservoir d'extrémité de radiateur d'automobile produits par la composition de résine de polycétone selon l'une quelconque des revendications 6 à 9.

**11.** Composant sélectionné dans le groupe consistant en un boulon en polycétone, un commutateur industriel, une bobine, une chaîne pour le traitement des boues des eaux usées, une attache de câble, un composant pour eau potable, un capot propre de cuiseur sous pression, un joint d'étanchéité pour batterie alcaline et une carcasse fermée produits par la composition de résine de polycétone selon l'une quelconque des revendications 6 à 9.

**12.** Composant selon l'une quelconque des revendications 10 à 11, **caractérisé en ce qu'**un taux de conservation de propriétés n'est pas inférieur à 80 % dans une condition de température de 50 °C et d'humidité relative de 90 % après traitement pendant 24 heures, et le taux d'absorption d'humidité n'est pas supérieur à 1,5 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4880903 A
- EP 0213671 A1
- GB 2334522 A
- WO 0031164 A1
- US 5077385 A
- EP 0569101 A1
- US 4843144 A